# EUROPEAN PATENT APPLICATION

(11) **EP 4 535 886 A1**
(43) Date of publication of application: **09.04.2025**
(21) Application number: 23835706.5
(22) Date of filing: 14.06.2023
(51) Int. Cl.: H04W 64/00, H04W 4/029, H04W 72/20, H04W 72/02, H04W 76/14, H04W 8/24, H04W 92/18, H04L 5/00

(54) **METHOD AND DEVICE FOR PERFORMING SIDELINK POSITIONING WITHIN SERVICE RANGE OF BASE STATION IN WIRELESS COMMUNICATION SYSTEM**

(30) Priority: 06.07.2022 KR 20220083174
(71) Applicant: Samsung Electronics Co., Ltd., Suwon-si, Gyeonggi-do 16677 (KR)
(72) Inventor: LEE, Taeseop, Suwon-si, Gyeonggi-do 16677 (KR); KANG, Hyunjeong, Suwon-si, Gyeonggi-do 16677 (KR); HWANG, June, Suwon-si, Gyeonggi-do 16677 (KR)
(74) Representative: HGF
(86) International application number: PCT/KR2023/008213
(87) International publication number: WO 2024/010237

(57) **Abstract**

The present disclosure relates to a communication technique that merges IoT technology with a 5G communication system for supporting higher data transmission rates than 4G systems, and a system therefor. The present disclosure may be applied to intelligent services (for example, smart homes, smart buildings, smart cities, smart cars or connected cars, healthcare, digital education, retail business, security and safety-related services, etc.) based on 5G communication technology and IoT-related technology.

## Description

### [Technical Field]

The disclosure relates to a method and device for providing sidelink positioning services in a mobile communication system.

### [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' communication system or a 'Post LTE System'. The 5G communication system is considered to be implemented in higher frequency (mmWave) bands (e.g., 60 GHz bands), so as to accomplish higher data rates. To reduce the path loss of radio waves in ultrahigh frequency bands and increase the transmission distance of radio waves, the beamforming, massive MIMO, Full Dimensional MIMO (FD-MIMO), array antenna, an analog beamforming, and large scale antenna techniques are discussed in 5G communication systems. In addition, in 5G communication systems, development for system network improvement is under way based on evolved small cell, advanced small cell, cloud radio access network (cloud RAN), ultra-dense network, device to device (D2D) communication, wireless backhaul, moving network, cooperative communication, Coordinated Multi-Points (CoMP), reception interference cancellation and the like. In addition, in the 5G system, Hybrid FSK and QAM Modulation (FQAM) and sliding window superposition coding (SWSC) as an advanced coding modulation (ACM) scheme, and filter bank multi carrier(FBMC), non-orthogonal multiple access(NOMA), and sparse code multiple access (SCMA) as an advanced access technology have been developed.

Meanwhile, the Internet is evolved from a human-centered connection network through which a human being generates and consumes information to the Internet of Things (IoT) network that transmits/receives information between distributed components such as things and processes the information. The Internet of Everything (IoE) technology in which the big data processing technology, etc., is combined with the IoT technology by connection with a cloud server, etc., has also emerged. To implement the IoT, technology elements, such as a sensing technology, wired and wireless communication and network infrastructure, a service interface technology, and a security technology, have been used. Recently, technologies such as a sensor network, machine to machine (M2M), and machine type communication (MTC) for connecting between things has been researched. In the IoT environment, an intelligent Internet technology (IT) service that creates a new value in human life by collecting and analyzing data generated in the connected things may be provided. The IoT may be applied to fields, such as a smart home, a smart building, a smart city, a smart car or a connected car, a smart grid, health care, smart appliances, and an advanced healthcare service, by fusing and combining the existing information technology (IT) with various industries.

Therefore, various tries to apply the 5G communication system to the IoT network have been conducted. For example, the 5G communication technologies, such as the sensor network, the machine to machine (M2M), and the machine type communication (MTC), have been implemented by techniques such as beamforming, MIMO, and the array antenna. The application of the cloud radio access network (cloud RAN) as the big data processing technology described above may also be considered as an example of the fusing of the 5G technology with the IoT technology.

Meanwhile, in 3GPP 5G system (5GS), a method for a terminal within the communication range of a base station to perform sidelink positioning needs to be defined.

### [Disclosure of Invention]

### [Technical Problem]

An object of the disclosure is to provide a device and method capable of effectively providing a service in a next-generation wireless communication system.

### [Solution to Problem]

In order to solve the above problems, a method of a base station in a communication system according to an example of the disclosure may comprise obtaining a request message requesting a configuration for transmission of a sidelink positioning reference signal (SL-PRS); determining the configuration for the transmission of the SL-PRS, on the basis of a parameter indicating a requirement related to the transmission of the SL-PRS, which is included in the request message; and transmitting, to a terminal that performs a sidelink positioning operation, a configuration message including the determined configuration for the transmission of the SL-PRS, wherein the terminal that performs the sidelink positioning operation may include at least one of a target terminal and an anchor terminal.

In addition, a method of a terminal in a communication system according to an example of the disclosure may comprise transmitting, to a base station, a request message requesting a configuration for transmission of a sidelink positioning reference signal (SL-PRS); and receiving, from the base station, a configuration message including the configuration for the transmission of the SL-PRS, on the basis of the request message, wherein the request message may include a parameter indicating a requirement related to the transmission of the SL-PRS, and the terminal may be a target terminal or an anchor terminal that performs a sidelink positioning operation.

In addition, a method of a location management function (LMF) entity in a communication system according to an example of the disclosure may comprise confirming a requirement related to transmission of a sidelink positioning reference signal (SL-PRS); transmitting, to a base station, a request message requesting a configuration for the transmission of the SL-PRS wherein the request message includes a parameter indicating a requirement related to the transmission of the SL-PRS; and obtaining the configuration for the transmission of the SL-PRS, on the basis of the request message.

In addition, a base station in a communication system according to an example of the disclosure may comprise a transceiver; and a controller that controls the transceiver to obtain a request message requesting a configuration for transmission of a sidelink positioning reference signal (SL-PRS), determine the configuration for the transmission of the SL-PRS, on the basis of a parameter indicating a requirement related to the transmission of the SL-PRS, which is included in the request message, and transmit, to a terminal that performs a sidelink positioning operation, a configuration message including the determined configuration for the transmission of the SL-PRS, wherein the terminal that performs the sidelink positioning operation may include at least one of a target terminal and an anchor terminal.

In addition, a terminal in a communication system according to an example of the disclosure may comprise a transceiver; and a controller that controls the transceiver to transmit, to a base station, a request message requesting a configuration for transmission of a sidelink positioning reference signal (SL-PRS), and receive, from the base station, a configuration message including the configuration for the transmission of the SL-PRS, on the basis of the request message, wherein the request message may include a parameter indicating a requirement related to the transmission of the SL-PRS, and the terminal may be a target terminal or an anchor terminal that performs a sidelink positioning operation.

In addition, a location management function (LMF) entity in a communication system according to an example of the disclosure may comprise a communication unit; and a controller that controls the communication unit to confirm a requirement related to transmission of a sidelink positioning reference signal (SL-PRS) and transmit, to a base station, a request message requesting a configuration for the transmission of the SL-PRS, and obtains the configuration for the transmission of the SL-PRS, on the basis of the request message, wherein the request message may include a parameter indicating a requirement related to the transmission of the SL-PRS.

### [Advantageous Effects of Invention]

According to a device and method proposed in the disclosure, services can be effectively provided in a next-generation wireless communication system.

### [Brief Description of Drawings]

FIG. 1 is a diagram illustrating the structure of an NR system according to an embodiment of the disclosure.
FIG. 2 is a diagram illustrating a wireless protocol structure in an LTE and NR system according to an embodiment of the disclosure.
FIG. 3 is a diagram illustrating a network structure for providing a UE location estimation service (LCS) in a next-generation mobile communication system according to an embodiment of the disclosure.
FIG. 4 is a flowchart of a process for performing LCS in a next-generation mobile communication system according to an embodiment of the disclosure.
FIG. 5 is a flowchart of a detailed LTE Positioning Protocol (LPP) message exchange process in a UE Procedure process according to an embodiment of the disclosure.
FIG. 6 is a diagram illustrating an SL-P service scenario according to an embodiment of the disclosure.
FIG. 7 is a flowchart for explaining the operation of option 1-1 based on an IC scenario according to an embodiment of the disclosure.
FIG. 8 is a flowchart for explaining the operation of option 1-2 based on an IC scenario according to an embodiment of the disclosure.
FIG. 9 is a flowchart for explaining the operation of option 2 based on the IC scenario according to one embodiment of the disclosure.
FIG. 10 is a flowchart for a process of selecting and transmitting necessary SL resources in a Mode 2 scheme in case that a UE according to an embodiment of the disclosure has no latency requirement for SL-P transmission.
FIG. 11 is a flowchart for a process of selecting and transmitting necessary SL resources in a Mode 2 scheme in case that a UE according to an embodiment of the disclosure has a latency requirement for SL-P transmission.
FIG. 12 is a diagram illustrating a UE device according to an embodiment of the disclosure.
FIG. 13 is a diagram illustrating a base station device according to an embodiment of the disclosure.
FIG. 14 is a block diagram of a structure of an LMF entity according to an example of the disclosure.

### [Mode for the Invention]

Hereinafter, embodiments of the disclosure will be described in detail with reference to the accompanying drawings. In addition, when it is decided that a detailed description for the known function or constitution related to the disclosure may obscure the disclosure, the detailed description therefor will be omitted. Further, the following terminologies are defined in consideration of the functions in the disclosure and may be construed in different ways by the intention or practice of users and operators. Therefore, the definitions thereof should be construed based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be loaded onto a processor of a general-purpose computer, special purpose computer, or other programmable data processing apparatus, such that the instructions, which execute via the processor of the computer or other programmable data processing apparatus, create means for implementing the functions specified in the flowchart block(s). These computer program instructions may also be stored in a computer usable or computer-readable memory that can direct a computer or other programmable data processing apparatus to implement functions in a particular manner, such that the instructions stored in the computer usable or computer-readable memory produce an article of manufacture including instruction means that perform the function specified in the flowchart block(s). The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block(s).

Further, each block may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the corresponding functionality.

As used herein, the '~unit' refers to a software element or a hardware element, such as field programmable gate array (FPGA) or application specific intergrated circuit (ASIC), which performs a predetermined function. However, the '~unit' does not always have a meaning limited to software or hardware. The '~unit' may be constructed either to be stored in an addressable storage medium or to execute one or more processors. Therefore, the '~unit' includes, for example, elements such as software elements, object-oriented software elements, class elements and task elements, processes, functions, properties, procedures, sub-routines, segments of a program code, drivers, firmware, micro-codes, circuits, data, database, data structures, tables, arrays, and parameters. The elements and functions provided by the '~unit' may be either combined into a smaller number of elements, and a '~unit', or divided into a larger number of elements, and a '~unit'. Moreover, the elements and '~unit' or may be implemented to reproduce one or more CPUs within a device or a security multimedia card. Also, in an embodiment, a '~unit' may include one or more processors.

In the following description of the disclosure, a detailed description of known functions or configurations incorporated herein will be omitted in case that it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

In the following descriptions, a physical channel and a signal may be interchangeably used with data or a control signal. For example, a physical downlink shared channel (PDSCH) is a term indicating a physical channel through which data is transmitted, but the PDSCH may be used to indicate data. That is, in the disclosure, an expression 'transmitting a physical channel' may be interpreted as an expression 'transmitting data or a signal through a physical channel.'

In the disclosure, higher signaling refers to a signal transmission method for transmitting, by a base station, signals to a terminal by using a downlink data channel of a physical layer, or for transmitting, by a terminal, signals to a base station by using an uplink data channel of a physical layer. The higher signaling may be understood as radio resource control (RRC) signaling or a media access control (MAC) control element (CE).

Hereafter, for convenience of description, the disclosure uses terms and names defined in 3rd generation partnership project (3GPP) new radio (NR) or 3rd generation partnership project (3GPP) long term evolution (LTE) standard. However, the disclosure is not limited by the terms and names, and may be applied equally to systems conforming to other standards. In the disclosure, a gNB may be used interchangeably with an eNB to ease the description. That is, the base station described as the eNB may indicate the gNB. In addition, the terminal may indicate a mobile phone, a MTC device, an NB-IoT device, a sensor or other wireless communication devices.

Hereafter, the base station, which performs resource allocation of the terminal, may be at least one of, but not limited to, a gNodeB (gNB), an eNode B (eNB), a NodeB, a base station (BS), a radio access unit, a base station controller, and a node on a network. The terminal may include, but not limited to, a user equipment (UE), a mobile station (MS), a cellular phone, a smart phone, a computer, or a multimedia system for performing a communication function.

The disclosure relates to a method and device for performing sidelink (SL) positioning in a mobile communication system. More specifically, the disclosure relates to a method and device for performing sidelink positioning (SL-P) by a UE within a base station communication range in 3GPP 5GS.

The disclosure describes a signaling method and procedure with a network required for a UE within a base station communication range to perform SL-P. To this end, specifically, UE capability information related to SL-P, transmission resource configuration information, etc. are newly defined. In addition, a method for allocating, to a UE, transmission resources required to perform sidelink positioning is described. To this end, when SL transmission resource configuration Mode 1 is used, a method for a base station to allocate necessary sidelink transmission resources to a UE, according to a request from an LMF and UE will be described. In case that Mode 2 is used for SL transmission resource configuration, a method for a base station to configure a resource pool for SL-P, according to a request from an LMF, and a method for a UE to determine transmission resources for SL-P in a Mode 2 scheme within a given resource pool will be described.

Through the disclosure, a network may indicate UEs within a base station communication range to perform SL-P. A location management function (LMF) may exchange SL-P-related UE capability information with UEs for an SL-P service, and indicate sidelink positioning-related operations to the UE. The LMF may be involved in configuring SL transmission resources in case that the UE needs to perform SL transmission for SL-P.

For example, in case that a Mode 1 resource configuration scheme is used for SL-P, the LMF and/or the UE may request the base station to configure transmission resources of the UE for SL-P, and the base station may configure SL transmission resources to the UE according to the request of the LMF and UE. In addition, for example, in case that a Mode 2 resource configuration scheme is used for SL-P, the LMF may request the base station to configure a transmission resource pool of the UE for SL-P, and the base station may allocate a transmission resource pool for SL-P to the UE according to the request of the LMF.

For example, in case that a Mode 1 resource configuration scheme is used for SL-P, the base station may configure the UE to transmit a sidelink positioning reference signal (SL-PRS). In addition, for example, in case that the Mode 2 resource configuration scheme is used for SL-P, the LMF may configure the UE to transmit SL-PRS. The UE may transmit SL-PRS according to the base station and LMF configurations.

In the above-described contents, in case that SL resource configuration Mode 1 and SL resource configuration Mode 2 are used, the contents described for each are for explaining general usage examples, and the corresponding operations need not be limited to each mode. For example, in case that the Mode 2 resource configuration scheme is used, it is also possible for a base station, not an LMF, to configure the SL-PRS transmission configuration of the UE.

The terms used in the disclosure may be defined as follows.
- Sidelink positioning (SL-P):

Location estimation of a UE using a reference signal transmitted on SL. In this case, the UE's location may be absolute positioning information, relative positioning information, and ranging information (e.g., distance/direction information with respect to another UE). Ranging operation (estimation of distance/direction/relative location between UEs) may be included in the SL-P concept.
- Target UE: A UE that is the target of location estimation.
- Anchor UE: A UE that helps in estimating the location of the target UE. (e.g., a UE that transmits and receives a reference signal for estimating the location of the target UE, a UE that transfers information necessary for location estimation to the target UE through SL, etc.)

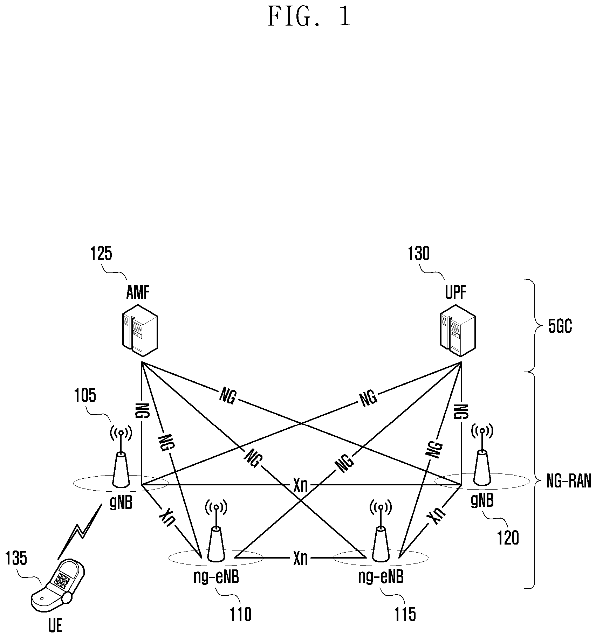

FIG. 1 is a diagram illustrating a structure of an NR system according to an embodiment of the disclosure.

With reference to FIG. 1, a wireless communication system may be constituted with multiple base stations (e.g., a gNB 105, an ng-eNB 110, an ng-eNB 115, a gNB 120), an access and mobility management function (AMF) 125, and a user plane function (UPF) 130. A user terminal (user equipment, UE, or terminal) 135 may access an external network through base stations (e.g., a gNB 105, an ng-eNB 110, an ng-eNB 115, a gNB 120) and UPF 130.

In FIG. 1, the base stations (e.g., a gNB 105, an ng-eNB 110, an ng-eNB 115, a gNB 120) are access nodes of a cellular network and may provide wireless access to UEs accessing the network. That is, in order to service users' traffic, the base stations (e.g., a gNB 105, an ng-eNB 110, an ng-eNB 115, a gNB 120) may collect and schedule state information of UEs, such as a buffer state, an available transmission power state, and a channel state, thereby supporting connection between the UEs and a core network (CN) (e.g., in case of the CN of an NR, 5GC). Meanwhile, a user plane (UP) related to transmission of actual user data in communication and a control plane (CP) related to connection management, etc., may be constituted separately. In this drawing, it is illustrated that gNB 105 and gNB 120 use UP and CP technologies defined in a new radio (NR) technology, and the ng-eNB 110 and ng-eNB 115 use UP and CP technologies defined in the long term evolution (LTE) technology even when connected to 5GC.

The AMF 125 is a device that is responsible for various control functions as well as mobility management functions for the UE and is connected to multiple base stations, and the UPF 130 may mean a type of gateway device that provides data transmission. Although not illustrated in FIG. 1, the NR wireless communication system may include a session management function (SMF). The SMF may manage packet data network connections such as protocol data unit (PDU) sessions provided to the UE.

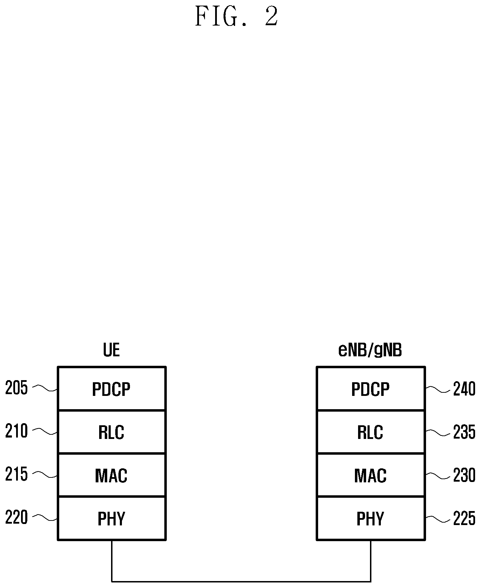

FIG. 2 is a diagram illustrating a radio protocol structure in an LTE and NR systems according to an embodiment of the disclosure.

With reference to FIG. 2, in a UE and eNB, wireless protocols of an LTE system each may be constituted with packet data convergence protocols (PDCPs) 205 and 240, radio link controls (RLCs) 210 and 235, and medium access controls (MACs) 215 and 230. The packet data convergence protocols (PDCPs) 105 and 140 are responsible for operations such as internet protocol(IP) header compression/recovery, and the radio link controls (hereinafter referred to as RLCs) 210 and 235 reconstruct a PDCP protocol data unit (PDU) in an appropriate size. The MACs 215 and 230 are connected to multiple RLC layer devices constituted in one UE, and perform operations of multiplexing RLC PDUs to MAC PDUs and demultiplexing RLC PDUs from MAC PDUs. Physical(PHY) layers 220 and 225 channel-code and modulate higher-layer data, convert the higher-layer data into an orthogonal frequency-division multiplexing (OFDM) symbol, and transmit the OFDM symbol through a radio channel, or demodulate and channel-decode OFDM symbols received through the radio channel, and deliver the OFDM symbol to a higher layer. In addition, hybrid automatic repeat request (HARQ) is used for additional error correction in the physical layers, and a reception end transmits 1-bit on whether a packet transmitted by a transmission end has been received. This is referred to as HARQ acknowledgment (ACK)/negative-ACK (NACK) information. Downlink HARQ ACK/NACK information for uplink data transmission is transmitted through a physical channel, physical hybrid-ARQ indicator channel (PHICH), in case of LTE. In case of NR, whether retransmission is necessary or a new transmission may be performed may be determined through the scheduling information of the corresponding UE on a Physical Dedicated Control Channel (PDCCH), which is a channel through which downlink/uplink resource allocation, etc. are transmitted. This is because the NR applies asynchronous HARQ. Uplink HARQ ACK/NACK information for downlink data transmission may be transmitted through a Physical Uplink Control Channel (PUCCH) or Physical Uplink Shared Channel (PUSCH) physical channel. The PUCCH is generally transmitted on the uplink of a primary cell (PCell) described later, but in case that the UE supports it, the base station may additionally transmit a PUCCH to the corresponding UE on a secondary cell (SCell) described later, and the SCell on which the PUCCH is transmitted in this way is called a PUCCH SCell.

Although not shown in the drawing, there is a radio resource control (RRC) layer above a PDCP layer of each of a UE and a base station, and access and measurement-related configuration control messages may be transmitted and received through the RRC layer in order to control radio resources.

Meanwhile, the physical (PHY) layer may be formed of one or a plurality of frequencies/carriers, and a technology for simultaneously configuring and using a plurality of frequencies is referred to as carrier aggregation (CA). The CA technology uses a main carrier and one or a plurality of secondary subcarriers to dramatically increase the transmission amount by the number of secondary subcarriers, rather than using only one carrier for communication between a terminal (UE) and a base station (E-UTRAN NodeB, eNB). Meanwhile, in LTE, a cell in a base station using a main carrier is called a main cell or a primary cell (PCell), and a cell in a base station using a subcarrier is called a subcell or a secondary cell (SCell).

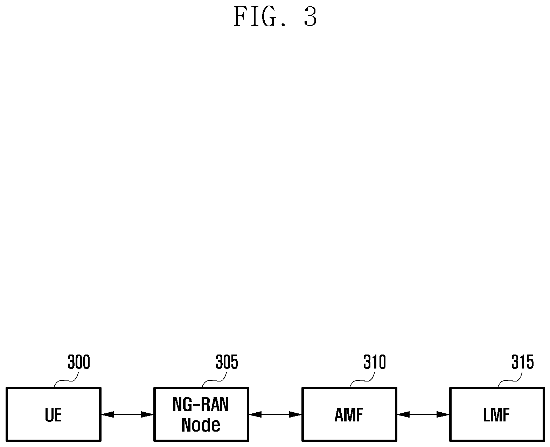

FIG. 3 is a diagram illustrating a network structure for providing UE location estimation services (LoCation Services, LCS) in a next-generation mobile communication system according to an embodiment of the disclosure.

With reference to FIG. 3, a network for providing LCS in a next-generation mobile communication system is constituted with a UE 300, a base station (NG-RAN Node) 305, an Access and Mobility Management Function (AMF) 310, and a Location Management Function (LMF) 315. In this case, the UE 300 communicates with the LMF 315 through the base station 305 and the AMF 310 and exchanges information necessary for location estimation. The roles of each component for providing LCS are as follows.

The UE 300 may perform a role of measuring a wireless signal necessary for location estimation and transmitting the result to the LMF 115.

The base station 305 may perform a role of transmitting a downlink wireless signal necessary for location estimation to the UE, measuring an uplink wireless signal transmitted by the target UE, and the like.

After receiving an LCS Request message from an LCS requester (LCS client), the AMF 310 may perform the role of indicating the provision of a location provision service by delivering it to the LMF 315. In addition, when the LMF 315 processes a location estimation request and then transmits a response to the location estimation result of the UE, the AMF 310 may transfer the corresponding result to the LCS requester.

The LMF 315 is a device that receives and processes an LCS Request from the AMF 110 and may perform the role of controlling the overall process required for location estimation. For UE location estimation, the LMF 315 provides assistance information required for location estimation and signal measurement to the UE 300 and obtains the result value from the corresponding UE. In this case, LTE Positioning Protocol (LPP) may be used as a protocol for data exchange. LPP may define the message standard exchanged between the UE 300 and the LMF 315 for the location estimation service. In addition, the LMF 315 may exchange configuration information of a downlink reference signal (Positioning Reference Signal, PRS) to be used for location estimation and measurement results of an uplink reference signal (Sounding Reference Signal, SRS) with the base station 305. In this case, NR Positioning Protocol A (NRPPa) may be used as a protocol for data exchange, and NRPPa may define a message standard exchanged between the base station 305 and the LMF 315.

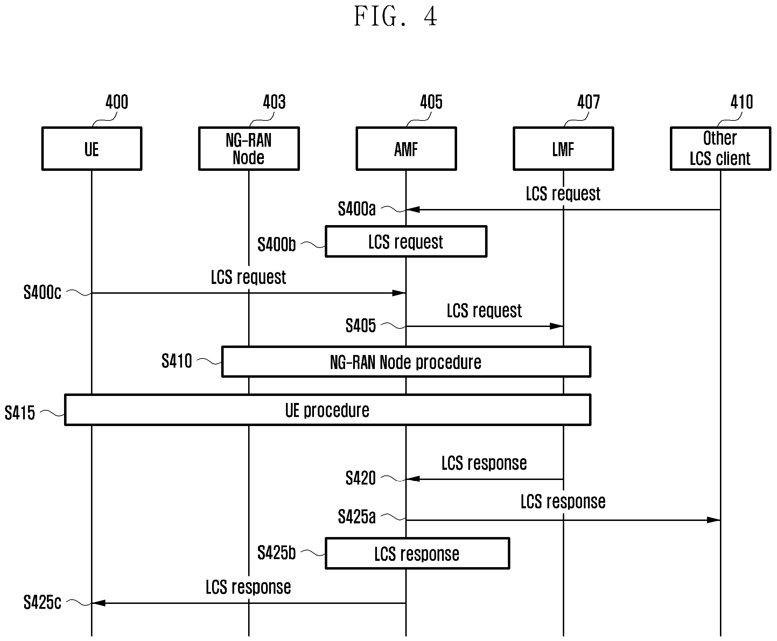

FIG. 4 is a flowchart of a process of performing LCS in a next-generation mobile communication system according to an embodiment of the disclosure.

With reference to FIG. 4, after obtaining the LCS request S400a/S400b/S400c, the AMF 405 may transfer the LCS request to the LMF 407. Thereafter, the LMF 407 may control the process of exchanging the required information with the UE and base station to process the LCS request S400a/S400b/S400c transferred from the AMF 405, and transfer the result value (location estimation result) to the AMF 405. Performing LCS may be completed by the AMF 405 transferring the result value transferred from the LMF 407 to the target (LCS client) that has requested the LCS.

There are 3 types of LCS requests obtained by the AMF 105 in S400a, S400b, and S400c operations.
1. LCS request S400a received from an external LCS client 110
2. LCS request S400b generated by the AMF 105 itself
3. LCS request S400c received from the UE 100

The LCS Request may include the identity (ID) of the LCS target UE and LCS Quality of Service (QoS) request information (e.g., requirements for location estimation accuracy and latency).

After obtaining one of the three types of LCS requests, the AMF 405 may request the LMF 407 to provide a location estimation service by transmitting a location service request message S405. Thereafter, in the NG-RAN Node procedure operation S410, the LMF 407 may perform a procedure (e.g., configuring PRS to the base station, obtaining SRS measurement information from the base station, etc.) required for location estimation via an NRPPa message exchange with the NG-RAN Node 403.

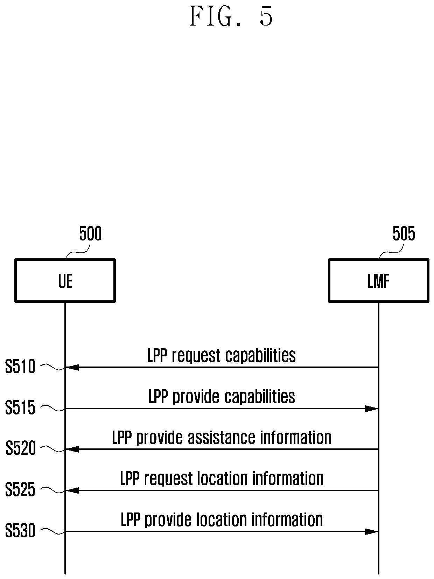

In addition, in the UE procedure operation S415, the LMF 407 may exchange an LPP message to exchange required information with the UE 400. Through the above process, the LMF 407 may perform the corresponding procedures such as exchanging UE capability information related to location estimation, delivering assistance information for signal measurement of the UE, requesting a UE measurement result and obtaining the UE measurement result. In this regard, more detailed description will be provided later with reference to FIG. 5.

When the LMF 407 determines the estimated location of the UE based on various measurement results obtained, the LMF 407 may deliver a location service response message S420 to the AMF 405. The AMF 405 may transfer the LCS response message S425a/S425b/S425c to the target that has requested the LCS, and herein, the LCS response message S425a/S425b/S425c may include a UE location estimation result.

FIG. 5 is a flowchart of a process of exchanging a detailed LPP message in a UE procedure according to an embodiment of the disclosure.

With reference to FIG. 5, a UE procedure according to an embodiment of the disclosure may include the procedures of exchanging, by the LMF 505, UE capability information related to location estimation with the UE 500, delivering assistance information for signal measurement of the UE, requesting and obtaining a UE measurement result, etc. The usage and definition of each LPP message sent and received at each operation as follows.

LPP Request Capabilities (LMF → UE, S510)

: A message that may be used by the LMF 505 to request UE capability information related to location estimation to the UE 500. Information included in the message may be defined as illustrated in Table 1 below. With reference to Table 1, the request for common information regardless of the location estimation method (e.g., global navigation satellite system (GNSS), observed time difference of arrival (OTDOA), enhanced cell ID (ECID), etc.) is included in CommonIEsRequestCapabilities, and a request for additionally required information for each location estimation method may be included in a separate information element (IE) for each scheme.

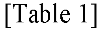

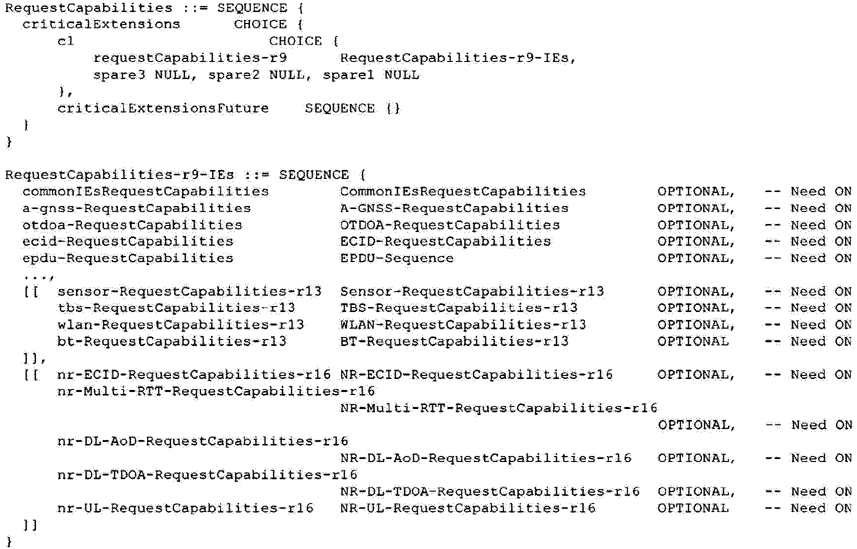

LPP Provide Capabilities (UE→LMF, S515)

: A message that may be used by the UE 500 to transfer UE capability information requested from the LMF 505. Information included in the message may be defined as illustrated in Table 2 below. With reference to Table 2, similar to the LPP request capabilities message, common information regardless of the location estimation method may be included in commonIEsProvideCapabilities, and information requested for each location estimation method may be included in separate IEs.

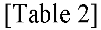

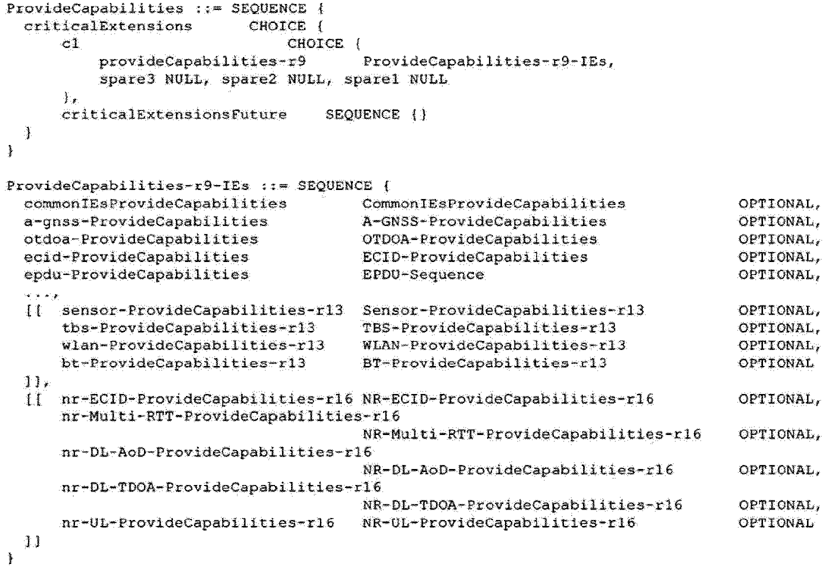

LPP Provide Assistance Data (LMF→UE, S520)

: A message that may be used to make the LMF 505 provide information required or helpful for the UE 500 to perform radio signal measurement for location estimation. Information included in the corresponding message may be defined as illustrated in Table 3 below.

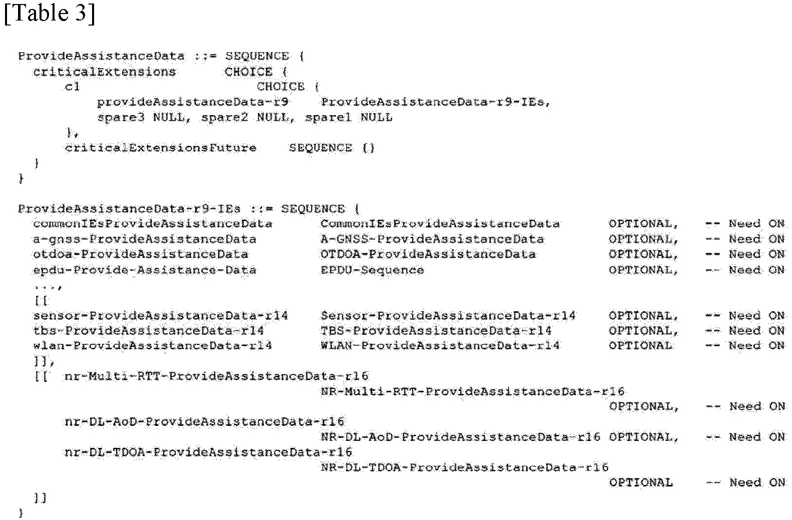

LPP Request Location Information (LMF→UE, S525)

: A message that may be used by the LMF 505 to request the UE 500 to measure a signal required for location estimation and to request a location estimation result. After determining which location estimation method to use, what measurement the UE should perform for the location estimation method, what result and how to respond, etc., the LMF 505 may transmit related information to the UE 500 by including the related information in this message. Information included in the corresponding message may be defined as illustrated in Table 4 below.

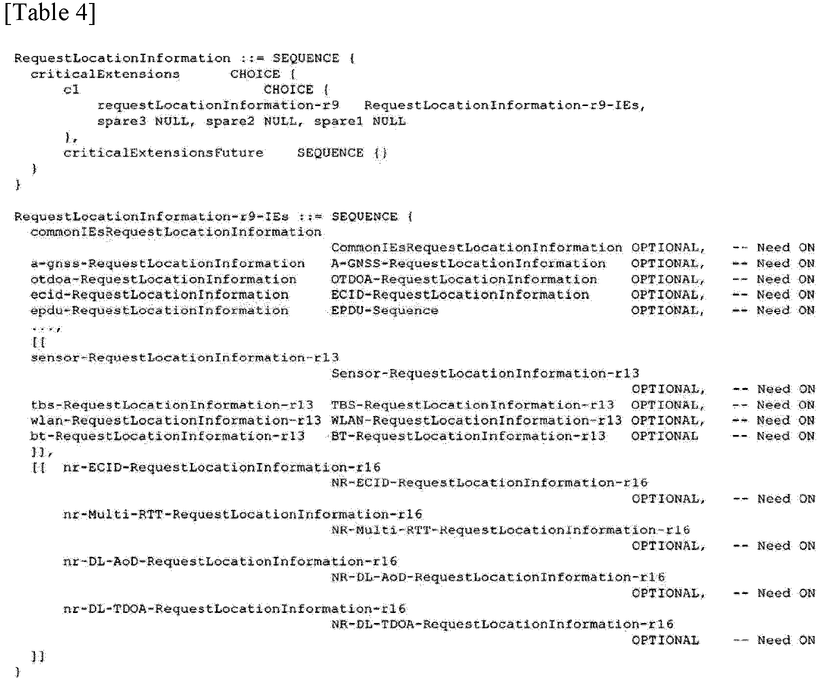

LPP Provide Location Information (UE→LMF, S530)

: A message that may be used by the UE 500 to transfer the measurement result and location estimation result requested from the LMF505 to the LMF 105. Information included in the corresponding message may be defined as illustrated in Table 5 below.

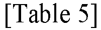

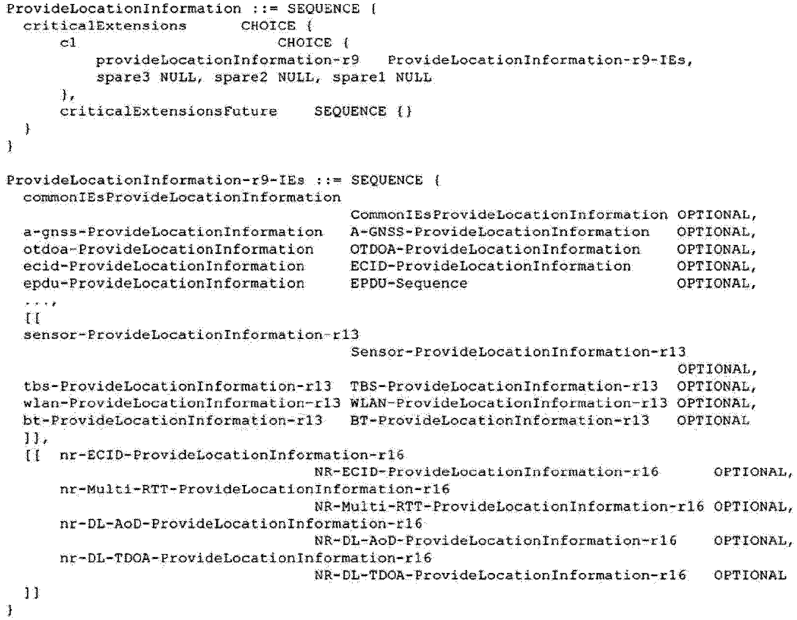

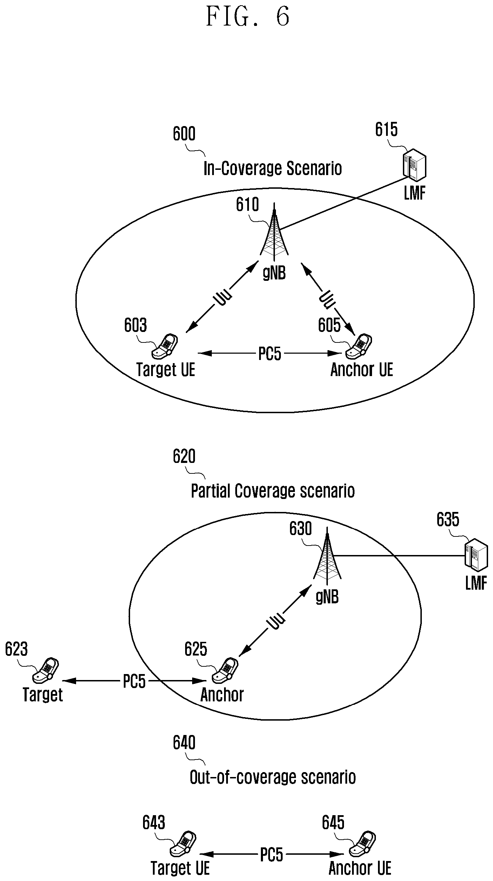

FIG. 6 is a diagram illustrating a Sidelink positioning service scenario according to an embodiment of the disclosure.

With reference to FIG. 6, the following three SL-P scenarios may be defined depending on whether the Target/Anchor UE are within a base station communication range (i.e., cell coverage of the base station), respectively.
- In-Coverage scenario 600:

This is a scenario in which both a target UE 603, which is a target for location estimation in SL-P, and an anchor UE 605, which assists in location estimation, are within a communication range of a base station 610.

In this case, the target UE 603/anchor UE 605 are each connected to a cell operated by the base station 610 and is in a state where it may communicate via a Uu interface. In this case, a LMF 615 may exchange LPP messages with the target UE 603/anchor UE 605 for SL-P operation and may participate in the SL-P operation. The LPP messages between the LMF 615 and the target UE 603/anchor UE 605 are transferred through the Uu interface between the target UE 603/anchor UE 605 and the base station 610.

For SL-P operation, the target UE 603 may transmit and receive SL-PRS with the anchor UE 605 through a PC5 interface. In addition, the target UE 603 and anchor UE 605 may transmit and receive SL-PRS and control messages for SL-P operation through the PC5 interface. Mode 1 or Mode 2 scheme may be used as a resource configuration method for sidelink (SL) transmission of the target UE 603/anchor UE 605.

In case that Mode 1 scheme is used, the base station may directly allocate SL transmission resources for SL-P operation. In this case, SL transmission resources may be allocated from licensed based carriers used only for SL communication (licensed carriers dedicated to SL communication), or licensed band carriers used for SL and uplink transmission (licensed carriers sharing resources between SL and UL communication). The SL transmission resource configuration of the base station may include information about time (slot) and frequency (subchannel) domains, and in case that the resource configuration is performed in the Configured Grant (CG) scheme, information about the transmission resource periodicity may also be included. In case that the Mode 1 resource configuration scheme is used, the LMF requests the base station to configure SL transmission resources for performing SL-P operations of the target UE/anchor UE (e.g., transmitting and receiving SL-PRS and control messages through the PC5 interface), and the base station may configure SL transmission resources to the target UE/anchor UE in the Mode 1 scheme accordingly. In addition, the LMF configures the operations required for SL-P operation to the target UE/anchor UE, and the target UE/anchor UE may directly request the base station for the SL transmission resources required for the corresponding operations. In this case, the base station may allocate the required SL transmission resources according to the request of each UE.

In case that Mode 2 scheme is used, the base station may allocate a resource pool (sidelink resource pool) that may be used for SL transmission, and the target UE/anchor UE may directly select transmission resources required for SL-P operation from the allocated resource pool. In this case, the LMF may transfer requirements (e.g., frequency, bandwidth, etc.) for the SL resource pool to be used for SL-P operation to the base station. The base station may configure a new SL resource pool for the target UE/anchor UE according to the LMF request, or change the configurations for the existing configured SL resource pool.

In Mode 1 and Mode 2 resource configurations, a shared resource pool or a dedicated resource pool may be configured as the SL resource pool for SL-P operation. Here, using a shared SL resource pool means using a resource pool configured for SL communication purposes to transmit SL-P related information, and using a dedicated SL resource pool means using a resource pool configured individually for the SL-P function to transmit SL-P related information.
- Partial Coverage Scenario 620:

In SL-P, the target UE 623 that is the target of location estimation is located outside the communication range of the base station 630, and the anchor UE 625 that assists in location estimation is located within the communication range of the base station 630.

In this case, the anchor UE 625 is connected to the cell operated by the base station 630 and is in a state where it may communicate with the base station 630 through an Uu interface, and the target UE 623 is in a state where it may communicate with the anchor UE 625 through an SL PC5 interface. In this case, the LMF 615 may exchange LPP messages with the target UE 623/anchor UE 625 for SL-P operation, and may participate in the SL-P operation. An LPP message between the LMF 635 and the anchor UE 625 may be transmitted and received through the Uu interface with the base station 630, and an LPP message between the LMF 635 and the target UE 623 may be exchanged by the SL relay operation of the anchor UE 625. For example, an LPP message that the target UE 623 sends to the LMF 635 may be transferred to the anchor UE 625 through the PC5 interface, and then transferred to a network through the Uu interface of the anchor UE 625.

For SL-P operation, the target UE 623 may transmit and receive SL-PRS through the PC5 interface with the anchor UE 625. In addition, the target UE 623 and anchor UE 625 may transmit and receive SL-PRS and control messages for SL-P operation through the PC5 interface. Mode 1 or Mode 2 scheme may be used as a resource configuration method for sidelink transmission of the target UE 623/anchor UE 625.

In case that Mode 1 scheme is used, the SL transmission resources for SL-P operation may be directly allocated by the base station. In this case, the SL transmission resources may be allocated from licensed band carriers used only for SL communication (licensed carriers dedicated to SL communication) or licensed band carriers used for SL and uplink transmission (licensed carriers sharing resources between SL and UL communication). The SL transmission resource configuration of the base station may include information about time (slot) and frequency (subchannel) domains, and in case that the resource configuration is performed in the Configured Grant (CG) scheme, information about transmission resource periodicity may also be included. In case that Mode 1 resource configuration scheme is used, the LMF may request the base station to configure SL transmission resources for SL-P operation of the target UE/anchor UE (e.g., transmission and reception of SL-PRS and control messages through the PC5 interface), and the base station may configure SL transmission resources to the anchor UE in Mode 1 scheme accordingly. In addition, the LMF may configure the operation required for SL-P operation to the target UE/anchor UE, and the anchor UE may directly request the base station for the SL transmission resources required for the corresponding operation. In this case, the base station may allocate the required SL transmission resources according to the request of the anchor UE.

In case that Mode 2 scheme is used, the base station may allocate a resource pool (sidelink resource pool) that may be used for SL transmission, and the target UE/anchor UE may directly select the transmission resources required for the SL-P operation. In this case, the LMF may transfer the requirements (e.g., frequency, bandwidth, etc.) for the SL resource pool to be used for the SL-P operation to the base station. The base station may configure a new SL resource pool for the target UE/anchor UE according to the LMF request, or change the configurations for the previously configured SL resource pool.

In the resource configuration of Mode 1 and Mode 2, a shared resource pool or dedicated resource pool may be configured as the SL resource pool for the SL-P operation. Here, using a shared SL resource pool means using a resource pool configured for SL communication purposes to transmit SL-P related information, and using a dedicated SL resource pool means using a resource pool configured individually for SL-P functions to transmit SL-P related information.
- Out-of-coverage scenario 640:

This is a scenario in which both the target UE 643 and the anchor UE 645, which are the location estimation targets in SL-P, are located outside the communication range of the base station.

In this case, both the target UE 643/anchor UE 645 cannot communicate with the base station through the Uu interface, and the target UE 643 is in a state where it can only communicate with the anchor UE 645 through the SL PC5 interface. In addition, the LMF cannot exchange LPP messages with the target UE 643/anchor UE 645 for SL-P operation, and therefore cannot directly participate in the SL-P operation. For SL-P operation, the target UE 643 may transmit and receive SL-PRS with the anchor UE 645 through the PC5 interface. In addition, the target UE 643 and anchor UE 645 may transmit and receive control messages for transmission and reception of SL-PRS and SL-P operation through the PC5 interface. Mode 2 scheme may be used as a resource configuration method for sidelink transmission of the target UE 643/anchor UE 645.

In case that Mode 2 scheme is used, the base station may pre-allocate a resource pool (sidelink resource pool) that may be used for SL transmission (for example, may be configured when within the base station communication range), and the target UE 643/anchor UE 645 may directly select transmission resources required for SL-P operation using the pre-configured resource pool. In this case, the LMF may transfer requirements (for example, frequency, bandwidth, etc.) for SL resource pool to be used for SL-P operation to the base station. The base station may configure a new SL resource pool for the target UE 643/anchor UE 645 or change the configuration of an existing configured SL resource pool, according to the LMF request. A shared resource pool or dedicated resource pool may be configured as an SL resource pool for SL-P operation. Here, using a shared SL resource pool means using a resource pool configured for SL communication purposes to transmit SL-P related information, and using a dedicated SL resource pool means using a resource pool configured individually for the SL-P function to transmit SL-P related information.

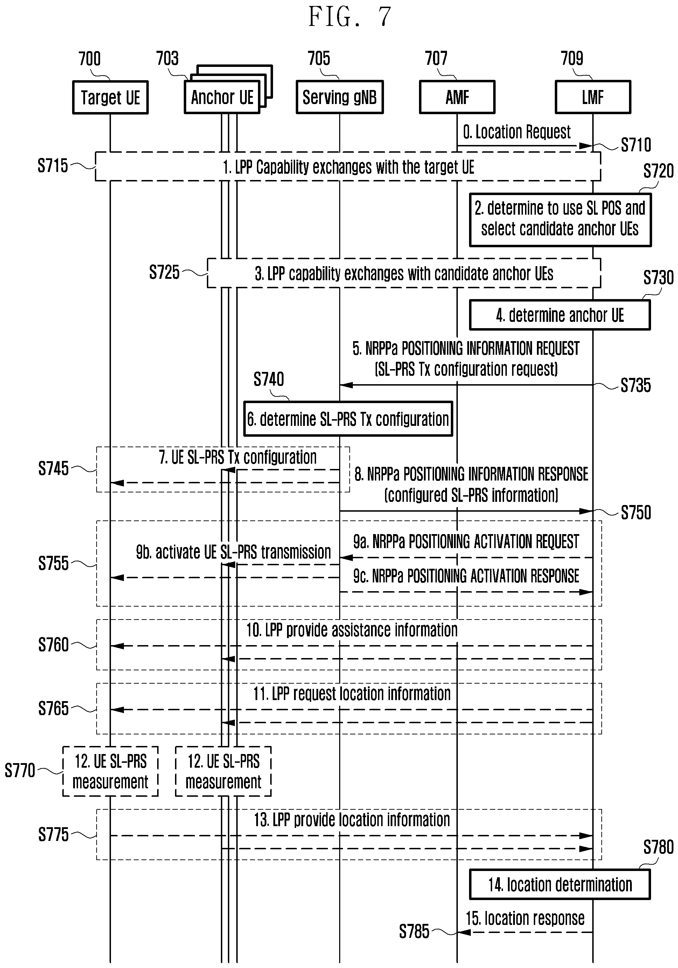

FIG. 7 is a flowchart for explaining the operation of option 1-1 based on the In-coverage scenario according to an embodiment of the disclosure.

More specifically, FIG. 7 describes a process in which a base station allocates SL resources necessary for SL-P operation to a UE in a Mode 1 scheme, according to a request of an LMF, and the UE performs the SL-P operation using the allocated resources (Scenario: LMF control overall SL-P procedure via Uu link with both target UE and anchor UE, Option 1-1: [LMF requested] SL-PRS resource allocation using Mode 1 with shared SL resource pool/dedicated SL resource pool).

With reference to FIG. 7, an LMF 709 may indicate the SL-P operations of a target UE 700 and anchor UE 703 through an LPP message. In this case, SL resource configuration for SL-P operation (e.g., SL-PRS transmission) of the target UE 700/anchor UE 703 may be performed in Mode 1 scheme, and the LMF 709 may request SL transmission resource configuration and SL-PRS transmission configuration to a serving gNB 705. The operation of each process may be described as follows.
- 0. Location Request (S710):

An AMF 707 may start location estimation service by sending a location request message S710 for the target UE 700 to the LMF 709. The location request message may include QoS requirement for location estimation service. In this case, in case that the ID of the anchor UE 703 is included in the LCS service request message received by the AMF 707 from an LCS client for the SL-P service, the location request message S710 may also include one or more anchor UE IDs along with the target UE ID. For example, a Generic Public Subscription Identifier (GPSI) or Subscription Permanent Identifier (SUPI) given in the LCS service request message may be used as an UE ID. For example, the location request message S710 for the SL-P service may include requirements for SL-P (ranging operation between two or more UE pairs), requirements for latency/accuracy, and the like. In addition, for example, in case that there is UE capability information related to location estimation (Positioning UE capability information) of the target UE/anchor UEs already secured, the AMF 707 may transmit this to the LMF 709 through the location request.
- 1. LPP Capability Transfer with the target UE (S715):

The LMF 709 and target UE 700 may exchange UE capability information related to location estimation through LPP messages. In this case, the LPP message exchanged between the LMF 709 and the target UE 700 may include the following UE capability information related to SL-P.
*SL-PRS Tx/Rx support
*Supported SL positioning method (e.g., RTT-type solution using SL, SL-AoA, SL-TDOA, SL-AoD) as Anchor/target UE
*Available mode of SL positioning (i.e., standalone, UE-based, UE-assisted) associated with each SL positioning method.
*Available role of SL positioning (e.g., target UE, Reference UE, Assistant UE, Located UE) associated with each SL positioning method
*Known location support
*SRC L2 ID, DST L2 ID (for SL-P unicast/groupcast or broadcast)

Meanwhile, in case that the AMF 707 provides UE capability information related to location estimation of the target UE 700 in operation 0 (S710), the operation of operation 1 (S715) may be omitted.
- 2. Determine to use SL-P and select candidate anchor UEs (S720):

The LMF 709 may determine to use one of the SL-P methods (e.g., RTT-based SL-P, SL-AoA, SL-TDOA, SL-AoD, etc.) based on the UE capability information related to location estimation of the target UE 700 and location estimation service requirements provided from the AMF 707 in operation 0 (S710). Further, depending on the determined SL-P method, in case that one or more anchor UEs 703 are required, the LMF 709 may select a candidate anchor UE based on the information it previously had (e.g., available anchor UE ID list, known location of each anchor UE, positioning capability of each anchor UE, serving cell of each anchor UE, available SL frequency/BW, etc.).

In addition, additionally, in case that the location request message transmitted through operation 0 includes an anchor UE ID provided by the LCS client, the LMF 709 may select the corresponding UE as a candidate anchor UE.
- 3. LPP Capability Transfer with candidate anchor UEs (S725):

The LMF 709 may exchange UE capability information related to location estimation that is required to perform SL-P with one or more candidate anchor UEs 703 through an LPP message, if necessary.
- 4. Determine anchor UE (S730):

The LMF 709 may determine an anchor UE, location estimation technique (e.g., RTT-type solution using SL, SL-AoA, SL-TDOA, SL-AoD), location estimation mode (i.e., standalone, UE-based, UE-assisted), etc., that will be eventually used, based on the UE capability information of the candidate anchor UEs 703 additionally collected in operation 3 (S725).
- 5. SL-PRS Tx configuration request (S735):

The LMF 709 may request the Serving gNB 705 for the SL-PRS transmission configuration (including transmission resource configuration) required for SL-P. In this case, the LMF 709 may transfer the requirement for SL-PRS transmission configuration to the serving gNB 705 through the following parameters, in consideration of the location estimation QoS requirements (e.g., location estimation accuracy and location estimation service latency) obtained in operation 0 (S710), the location (previously known location) of the target UE/anchor UE, and the like.
*Resource type (i.e., aperiodic, semi-persistent, periodic), # of required SL-PRS Tx, Periodicity
*SL-PRS Bandwidth/Frequency
*Spatial/Pathloss information
* SRC L2 ID, DST L2 ID (for SL-PRS unicast/groupcast/broadcast)
* Scheduling latency requirement (for example, it may be a requirement for the latency between when the LMF requesting SL-PRS transmission configuration and when configuration for SL-PRS transmission resource is actually made. Alternatively, in case that the LMF indicates the SL-PRS transmission timing, it may be a requirement for whether SL-PRS transmission should actually be made within a specific time offset from the corresponding timing.)
* SL-PRS Tx Activation/deactivation time

In this case, in case that there is one or more UEs that need to perform SL-PRS transmission, the above parameters may be given to each UE separately. Also, in case that the serving gNBs 705 of respective UE are different, the LMF 709 may request SL-PRS transmission configuration to one or more gNBs in parallel.

In addition, there may be several methods for configuring SL-PRS transmission resources. Here, it is assumed that the serving gNB 705 allocates SL-PRS transmission resources in Mode 1 based on the request of the LMF 709, and SL transmission resources may be allocated to the target UE/anchor UE in the dynamic grant scheme and the configured grant type 1 and configured grant type 2 schemes. When using techniques that require accurate SL-PRS transmission time, such as round trip transmission (RTT) and time difference of arrival (TDOA) schemes, and techniques that transmit SL-PRS once or multiple times based on a specific cycle, the base station may configure and allocate available resources in Mode 1 in a configured grant scheme.
- 6. Determine SL-PRS Tx configuration (S740):

The serving gNB 705 may determine the SL-PRS transmission configuration for SL-PRS transmission based on the request received from the LMF 809 in operation 5 (S735). The SL-PRS transmission configuration may include the following information.
*SL frequency, SL BWP, SL-PRS Tx pool (shared or dedicated)
   → In case that both the shared SL Tx resource pool and the SL-P dedicated Tx resource pool are configured, the UE uses the SL-P dedicated Tx resource pool by default. Alternatively, an indicator of which of the two pools to use may be included in the SL-PRS configuration.
*SL-PRS Tx resource allocation (Mode 1 with configured grant type1/2)
*SL-PRS Tx resource type (i.e., aperiodic, semi-persistent, periodic)
*txParameters (i.e., TxThreshIC, TxThreshOoC)
*Spatial/Pathloss information (this can indicate the sl-SSB from the anchor/target UE)
*SRC L2 ID, DST L2 ID (for SL-PRS unicast/groupcast/broadcast)
*SL-PRS Tx Activation/deactivation time

- 7. UE SL-PRS Tx Configuration (S745):

The serving gNB 705 may transfer the SL-PRS transmission configuration determined in operation 6 (S740) to one or more UEs that must perform SL-PRS transmission through an RRC message. (in case that an RTT-based method is assumed, both the target UE 700 and the anchor UE 703 require SL-PRS transmission, but in case that angle of arrival (AoA) or TDOA scheme is used, SL-PRS transmission may be required only for one of the anchor UE 703 and the target UE 700.)
- 8. Configured SL-PRS information (S750):

The serving gNB 705 may transfer the SL-PRS transmission configuration configured for each UE to the LMF 709 through an NRPPa message.
- 9. SL-PRS Tx activation (S755):

In case that a SL-PRS transmission resource type is aperiodic or semi-persistent, SL-PRS transmission activation/deactivation operation may be required. The serving gNB 705 may perform the SL-PRS transmission activation operation upon the request of the LMF 709.
* 9a. The LMF 709 may request SL-PRS transmission activation to the serving gNB 705. In this case, a specific activation time/deactivation time may be transferred together with the SL-PRS transmission activation request.
* 9b. The serving gNB 705 may indicate the target UE 700/anchor UE 703 to activate SL-PRS transmission using RRC/MAC control element (CE)/downlink control information (DCI), etc.
* 9c. The serving gNB 705 may report the SL-PRS transmission activation result to the LMF 709 as a response. In this case, the activation result may include information about the accurate SL-PRS transmission activation timing.

- 10. LPP Provide Assistance Data (S760):

The LMF 709 may transfer the SL-PRS configuration information received from the serving gNB 705 in operation 8 (S750) to the target UE 700/anchor UE 703 as assistance data for location estimation through an LPP message. If the activation operation of operation 9 (S755) was performed for the aperiodic/semi-persistent resource type, information about the activation timing obtained in operation 9c may also be included in the corresponding LPP message.
- 11. LPP Request Location Information (S765):

The LMF 709 may indicate the target UE 700/anchor UE 703 to perform necessary SL-PRS measurement and report the result through an LPP message. In this case, the LMF 709 may indicate SL-PRS measurement to both the target UE 700 and the anchor UE 703, or only one of them, depending on the location estimation technique used.
- 12. UE SL-PRS measurement (S770):

The target UE 700/anchor UE 703 may perform necessary SL-PRS measurement according to the indication of the LMF 709. As described above, measurement operation may be performed only on one of the target UE 700/anchor UE 703 depending on the location estimation technique.
- 13. LPP Provide Location Information (S775):

The target UE 700/anchor UE 703 may report the measured result (calculated location information in case of UE-based mode) to the LMF 709. In case of the anchor UE 703, it may additionally report information about its actual location (known location) for absolute positioning estimation of the target UE 700.
- 14. Location determination (S780):

The LMF 709 may finally determine the location of the target UE 700.
- 15. Location response (S785):

The LMF 709 may transfer the location estimation result of the target UE 700 to the AMF 707.

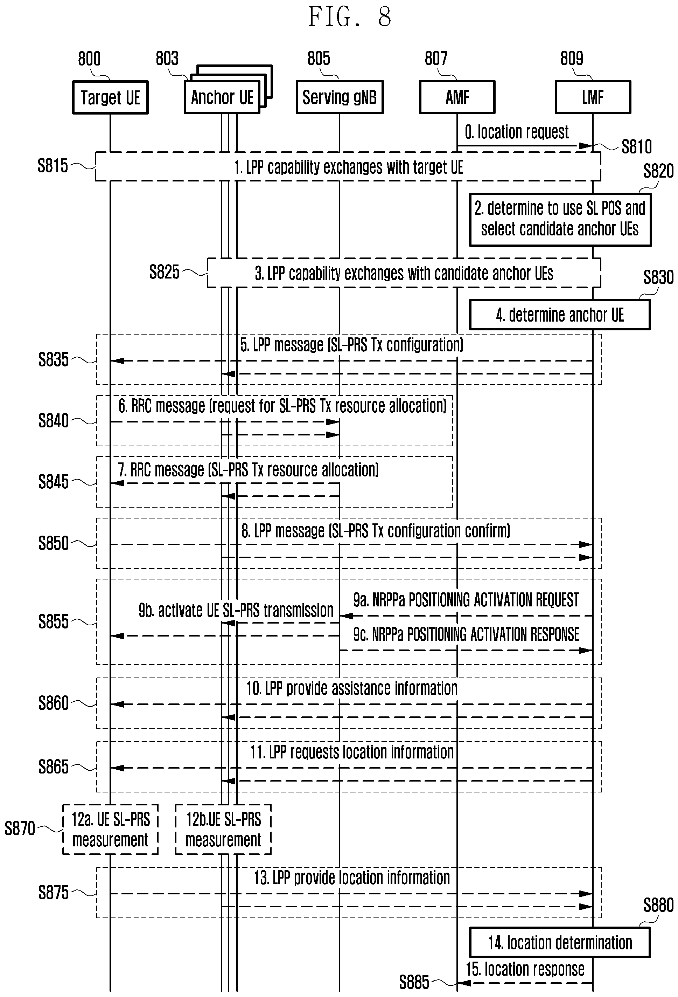

FIG. 8 is a flowchart for explaining the operation of option 1-2 based on an IC scenario according to an embodiment of the disclosure.

More specifically, FIG. 8 describes a process in which a base station allocates SL resources necessary for SL-P operation to a UE in a Mode 1 scheme, according to a request of the UE, and the UE performs the SL-P operation using the allocated resources (Scenario: LMF control overall SL-P procedure via Uu link with both target UE and anchor UE, Option 1-2: [UE requested] SL-PRS resource allocation using Mode 1 with shared or dedicated SL resource pool).

With reference to FIG. 8, an LMF 809 may indicate the SL-P operations of a target UE 800 and anchor UE 803 through an LPP message. In this case, SL resource configuration for SL-P operation (e.g., SL-PRS transmission) of the target UE 800/anchor UE 803 may be performed in Mode 1 scheme. The LMF 809 may be configured to transmit SL-PRS to the target UE 800 and anchor UE 803, and the target UE 800/anchor UE 803 may request specific SL transmission resource configuration and SL-PRS transmission configuration to a serving gNB 805. The operation of each process may be described as follows.
- 0. Location Request (S810):

An AMF 807 may start location estimation service by sending a location request message S810 for the target UE 800 to the LMF 809. The location request message may include QoS requirement for location estimation service. In case that the ID of the anchor UE 103 is included in the LCS service request message received by the AMF 807 from an LCS client for the SL-P service, the location request message S810 may also include one or more anchor UE IDs along with the target UE ID. For example, a Generic Public Subscription Identifier (GPSI) or Subscription Permanent Identifier (SUPI) given in the LCS service request message may be used as an UE ID. For example, the location request message for the SL-P service may include requirements for SL-P (ranging operation between two or more UE pairs), requirements for latency/accuracy, and the like. In addition, for example, in case that the AMF 807 has UE capability information related to location estimation (Positioning UE capability information) of the target UE/anchor UEs already secured, the AMF 807 may transmit this to the LMF 809 through the location request.
- 1. LPP Capability Transfer with the target UE (S815):

The LMF 809 and target UE 800 may exchange UE capability information related to location estimation through LPP messages. In this case, the corresponding LPP message may include the following UE capability information related to SL-P.
*SL-PRS Tx/Rx support
*Supported SL positioning method (e.g., RTT-type solution using SL, SL-AoA, SL-TDOA, SL-AoD) as Anchor/target UE
*Available mode of SL positioning (i.e., standalone, UE-based, UE-assisted) associated with each SL positioning method.
*Available role of SL positioning (e.g., target UE, Reference UE, Assistant UE, Located UE) associated with each SL positioning method
*Known location support
*SRC L2 ID, DST L2 ID (for SL-P unicast/groupcast or broadcast)

Meanwhile, in case that the AMF 807 provides UE capability information related to location estimation of the target UE 800 in operation 0 (S810), the operation of operation 1 (S815) may be omitted.
- 2. Determine to use SL-P and select candidate anchor UEs (S820):

The LMF 809 may determine to use one of the SL-P methods (e.g., RTT-based SL-P, SL-AoA, SL-TDOA, SL-AoD, etc.) based on the UE capability information related to location estimation of the target UE 800 and location estimation service requirements provided from the AMF 807 in operation 0 (S810). Further, depending on the SL-P method, in case that one or more anchor UEs 803 are required, the LMF 809 may select a candidate anchor UE based on the information it previously had (e.g., available anchor UE ID list, known location of each anchor UE, positioning capability of each anchor UE, serving cell of each anchor UE, available SL frequency/BW, etc.).

In addition, additionally, in case that the location request message transmitted through operation 0 includes an anchor UE ID provided by the LCS client, the LMF 809 may select the corresponding UE as a candidate anchor UE.
- 3. LPP Capability Transfer with candidate anchor UEs (S825):

The LMF 809 may exchange UE capability information related to location estimation that is required to perform SL-P with one or more candidate anchor UEs 803 through an LPP message, if necessary.
- 4. Determine anchor UE (S830):

The LMF 809 may determine an anchor UE, location estimation technique (e.g., RTT-type solution using SL, SL-AoA, SL-TDOA, SL-AoD), location estimation mode (i.e., standalone, UE-based, UE-assisted), etc., that will be eventually used, based on the UE capability information of the candidate anchor UEs 803 additionally collected in operation 3 (S825).
- 5. SL-PRS Tx configuration (S835):

The LMF 809 may request the SL-PRS transmission to the target UE 800 and anchor UE 803. In this case, the LMF 709 may transfer the requirement for SL-PRS transmission configuration to the target UE 800 and anchor UE 803 through the following parameters, in consideration of the location estimation QoS requirements (e.g., location estimation accuracy and location estimation service latency) obtained in operation 0 (S810), the location (previously known location) of the target UE/anchor UE, and the like.
*Resource type (i.e., aperiodic, semi-persistent, periodic), # of required SL-PRS Tx, Periodicity
*Spatial/Pathloss information
* SRC L2 ID, DST L2 ID (for SL-PRS unicast/groupcast/broadcast)
* Scheduling latency requirement (for example, it may be a requirement for the latency between the LMF requesting SL-PRS transmission configuration and the actual SL-PRS transmission resource being configured. Alternatively, in case that the LMF indicates the SL-PRS transmission timing, it may be a requirement for whether SL-PRS transmission should actually be made within a specific time offset from the corresponding timing.)
* SL-PRS Tx Activation/deactivation time

In this case, in case that there is one or more UEs that must perform SL-PRS transmission, the above parameters may be given to each UE separately. In addition, there may be several methods for configuring SL-PRS transmission resources. Here, it is assumed that the serving gNB 805 allocates SL-PRS transmission resources in Mode 1 based on the request of the target UE 800 and anchor UE 803. The LMF 809 may indicate SL-PRS transmission to the target UE 800 and anchor UE 803 through an LPP message, and UEs may request SL-PRS transmission resource allocation to the serving gNB 805 through an RRC message to configure resources required for SL-PRS transmission. The serving gNB 805 may allocate SL transmission resources to the target UE/anchor UE using dynamic grant scheme and configured grant type 1 and configured grant type 2 schemes. When using techniques that require accurate SL-PRS transmission time, such as RTT and TDOA scheme, and techniques that transmit SL-PRS once or multiple times based on a specific cycle, the base station may configure and allocate available resources in Mode 1 in a configured grant scheme.
- 6. Request for SL-PRS Tx resource allocation (S840):
   * In the operation 5 (S835), each of the target UE 800/anchor UE 803 that has been requested to perform SL-PRS transmission operation from the LMF 809 may request the serving gNB 805 to allocate necessary SL transmission resources through an RRC message. In this case, the content requested from the LMF 809 in the operation 5 (S835) may be transferred to the serving gNB 805 as assistance information.
- 7. SL-PRS Tx resource allocation (S845):

The serving gNB 805 may determine the necessary SL-PRS transmission configuration based on the assistance information received from each UE in the operation 6 (S840), and then transfer the determined SL-PRS transmission configuration to each of the target UE 800 and the anchor UE 803. Here, the SL-PRS transmission configuration may include the following information.
*SL frequency, SL BWP, SL-PRS Tx pool (shared or dedicated)
   → In case that both the shared SL Tx resource pool and the SL-P dedicated Tx resource pool are configured, the UE uses the SL-P dedicated Tx resource pool by default. Alternatively, an indicator of which of the two pools to use may be included in the SL-PRS transmission configuration.
*SL-PRS Tx resource allocation (Mode 1 (dynamic grant), Mode 1 with configured grant type1/2)
*SL-PRS Tx resource type (i.e., aperiodic, semi-persistent, periodic)
*SL-PRS Tx activation/deactivation time
*txParameters (i.e., TxThreshIC, TxThreshOoC)
*Spatial/Pathloss information (this can indicate the SL-SSB from the anchor/target UE)
* SRC L2 ID, DST L2 ID (for SL-PRS unicast/groupcast/broadcast)

- 8. SL-PRS Tx configuration confirm (S850):

The UE that transmits SL-PRS may respond to the LMF 809 that it may perform the SL-PRS transmission operation as requested by the LMF 809 in operation 5 (S835). Also, in this operation, the SL-PRS transmission configuration received from the serving gNB 805 in the operation 7 (S845) may be transferred to the LMF 809.

In this case, for the operations of the operations 5 (S835) and 8 (S850), a new LPP message may be defined or an existing LPP message (Request/Provide Assistance data, Request/Provide Location Information, etc.) may be reused.
- 9. SL-PRS Tx activation (S855):

In case that a SL-PRS transmission resource type is aperiodic or semi-persistent, an SL-PRS transmission activation/deactivation operation may be required. The serving gNB 805 may perform the SL-PRS transmission activation operation according to the request of the LMF 809.
* 9a. The LMF 809 may request SL-PRS transmission activation to the serving gNB 805. In this case, the LMF 809 may transfer specific activation time/deactivation time along with the request.
* 9b. The serving gNB 805 may indicate the target UE 800/anchor UE 803 to activate SL-PRS transmission using RRC/MAC CE/DCI, etc.
* 9c. The serving gNB 805 may report the result of SL-PRS transmission activation to the LMF 809. In this case, the activation result may include information about the accurate SL-PRS transmission activation timing.

- 10. LPP Provide Assistance Data (S860):

The LMF 809 may transfer the SL-PRS configuration information received from the serving gNB 805 in operation 8 (S850) to the target UE 800/anchor UE 803 as location estimation assistance data through an LPP message. If the activation operation of operation 9 (S855) was performed for the aperiodic/semi-persistent resource type, information about the activation timing obtained in operation 9c may also be included here.
- 11. LPP Request Location Information (S865):

The LMF 809 may indicate the target UE 800/anchor UE 803 to perform necessary SL-PRS measurement and report the results through an LPP message. Depending on the location estimation technique used at this time, SL-PRS measurement may be indicated to both the target UE 800 and the anchor UE 803 or only one of them.
- 12. UE SL-PRS measurement (S870):

The target UE 800/anchor UE 803 may perform the necessary SL-PRS measurement according to the indication of the LMF 809. As described above, depending on the location estimation technique, the measurement operation may be performed only on one of the target UE 800/anchor UE 803.
- 13. LPP Provide Location Information (S875):

The result (calculated location information in case of UE-based mode) measured by the target UE 800/anchor UE 803 may be reported to the LMF 809. In the case of the anchor UE 803, in order for absolute positioning estimation of the target UE 800, information about its actual location (known location) may be additionally reported to the LMF 809.
- 14. Location determination (S880):

The LMF 809 may finally determine the location of the target UE 800.
- 15. Location response (S885):

The LMF 809 may transfer the location estimation result of the target UE 800 to the AMF 807.

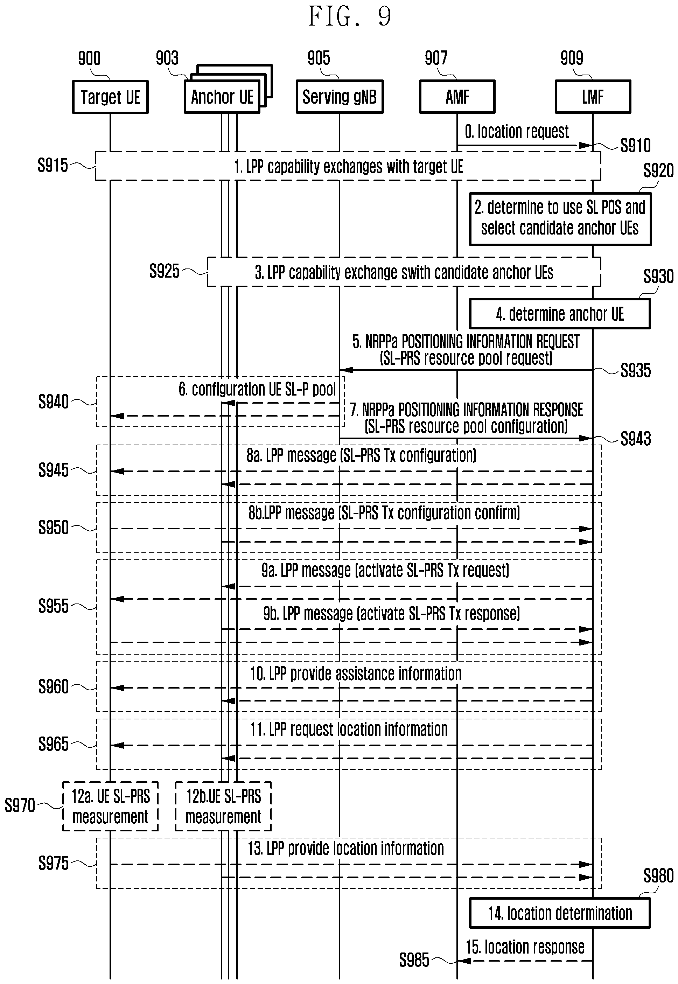

FIG. 9 is a flowchart for explaining the operation of option 2 based on an IC scenario according to an embodiment of the disclosure.

More specifically, FIG. 9 describes a process in which a base station allocates SL resources pool necessary for SL-P operation to a UE according to a request of an LMF, and then, the UE selects SL resources to use from the allocated resource pool in Mode 2 scheme and performs SL-P operation (Scenario: LMF control overall SL-P procedure via Uu link with both target UE and anchor UE, Option 2: SL-PRS resource allocation using Mode 2 with shared SL resource pool/dedicated SL resource pool).

With reference to FIG. 9, an LMF 909 may indicate the SL-P operations of a target UE 900 and anchor UE 903 through an LPP message. In this case, SL resource configuration for SL-P operation (e.g., SL-PRS transmission) of the target UE 900/anchor UE 903 may be performed in Mode 2 scheme. The LMF 909 is configured to transmit SL-PRS to the target UE 900 and anchor UE 903, and the target UE 900/anchor UE 903 selects transmission resources in Mode 2 scheme from the SL transmission resource pool configured by a serving gNB 905 based on this configuration, and then performs SL-P transmission. The LMF 909 may transfer requirements for SL resource pool configuration for SL-P service to the serving gNB 905 as needed, and the serving gNB 905 may configure the required SL resource pool to the target UE 900 and anchor UE 903 accordingly. The operation of each process may be described as follows.
- 0. Location Request (S910):

An AMF 907 may start location estimation service by sending a location request message S910 for the target UE 900 to the LMF 909. The location request message may include QoS requirement for location estimation service. In case that the ID of the anchor UE 903 is included in the LCS service request message received by the AMF 907 from an LCS client for the SL-P service, the location request message S910 may also include one or more anchor UE IDs along with the target UE ID. For example, a Generic Public Subscription Identifier (GPSI) or Subscription Permanent Identifier (SUPI) given in the LCS service request message may be used as an UE ID. For example, the location request message for the SL-P service may include requirements for SL-P (ranging operation between two or more UE pairs), requirements for latency/accuracy, and the like. In addition, for example, in case that the AMF 907 has UE capability information related to location estimation (Positioning UE capability information) of the target UE 900/anchor UEs 903 already secured, the AMF 907 may transmit this to the LMF 909 through the location request.
- 1. LPP Capability Transfer with the target UE (S915):

The LMF 909 and target UE 900 may exchange UE capability information related to location estimation through LPP messages. In this case, the LPP message may include the following UE capability information related to SL-P.
*SL-PRS Tx/Rx support
*Supported SL positioning method (e.g., RTT-type solution using SL, SL-AoA, SL-TDOA, SL-AoD) as Anchor/target UE
*Available mode of SL positioning (i.e., standalone, UE-based, UE-assisted) associated with each SL positioning method.
*Available role of SL positioning (e.g., target UE, Reference UE, Assistant UE, Located UE) associated with each SL positioning method
*Known location support
*SRC L2 ID, DST L2 ID (for SL-P unicast/groupcast or broadcast)

Meanwhile, in case that the AMF 907 provides UE capability information related to location estimation of the target UE 900 in operation 0 (S910), the operation of operation 1 (S915) may be omitted.
- 2. Determine to use SL-P and select candidate anchor UEs (S920):

The LMF 909 may determine to use one of the SL-P methods (e.g., RTT-based SL-P, SL-AoA, SL-TDOA, SL-AoD, etc.) based on the UE capability information related to location estimation of the target UE 900 and location estimation service requirements provided from the AMF 907 in operation 0 (S910). Depending on the SL-P method, in case that one or more anchor UEs 803 are required, the LMF 909 may select a candidate anchor UE based on the information it previously had (e.g., available anchor UE ID list, known location of each anchor UE, positioning capability of each anchor UE, serving cell of each anchor UE, available SL frequency/BW, etc.).

In addition, additionally, in case that the location request message transmitted through operation 0 includes an anchor UE ID provided by the LCS client, the LMF 909 may select the corresponding UE as a candidate anchor UE.
- 3. LPP Capability Transfer with candidate anchor UEs (S925):

The LMF 909 may exchange UE capability information related to location estimation that is required to perform SL-P with one or more candidate anchor UEs 903 through an LPP message, if necessary.
- 4. Determine anchor UE (S930):

The LMF 909 may determine an anchor UE, location estimation technique (e.g., RTT-type solution using SL, SL-AoA, SL-TDOA, SL-AoD), location estimation mode (i.e., standalone, UE-based, UE-assisted), etc., that will be eventually used, based on the UE capability information of the candidate anchor UEs 903 additionally collected in operation 3 (S925).
- 5. SL-PRS Tx configuration (S935):

The LMF 909 may request the SL resource pool information for SL-PRS transmission to the serving gNB 905. In case that UEs that must perform SL-PRS transmission are connected to a plurality of serving gNBs 905, the LMF 909 may request SL resource pool information in parallel to multiple serving gNBs 905. If necessary, the LMF 909 may also request SL-P dedicated resource pool configuration to the serving gNB 905 through a specific indicator. In this case, the following information may be included as a preference for the requested resource pool.
* Frequency, bandwidth, Sub Carrier Spacing (SCS) value or range
* Resource Reservation Interval (RRI) value or range
* Modulation Coding Scheme (MCS) value or range
* RSRP value or range used for resource selection
* Whether semi-persistent scheduling is required
* Maximum number of SL resources that may be reserved via SCI transmission (N_{SCI})
* Priority threshold for pre-emption
   - 6. UE SL-P pool configuration (140):
* The serving gNB 905 may allocate a new/updated dedicated resource pool to the target UE 900 and anchor UE 903 through an RRC message in case that it needs to configure a new SL-P dedicated resource pool or change an existing configured dedicated resource pool at the request of the LMF 909.
   - 7. SL-PRS resource pool configuration (S943):

The serving gNB 905 may finally share the SL resource pool information configured for SL-PRS transmission and reception to the target UE 900 and anchor UE 903 with the LMF 909. In this case, the signaling for sharing the SL resource pool information may include the following information.
* SL frequency, SL BWP(bandwidth part)
* SL Tx/Rx resource pool (shared or dedicated)

- 8a. SL-PRS Tx configuration (S945):

The LMF 909 may request SL-PRS transmission to the target UE 900 and anchor UE 903 that must perform SL-PRS transmission operation through an LPP message. In this case, the LMF 909 may transfer requirements for SL-PRS transmission configuration to the target UE 900 and anchor UE 903 through the following parameters, considering location estimation QoS requirements (e.g., requirements for accuracy and location estimation latency) received in operation 0 (S910), the locations of the target UE/anchor UE, and the like.
*Resource type (i.e., aperiodic, semi-persistent, periodic), # of required SL-PRS Tx, Periodicity
*Spatial/Pathloss information
* SL SRC L2 ID, SL DST L2 ID (for uni/group/broadcast)
* Scheduling latency requirement (for example, it may be a requirement for the latency between when LMF requests SL-PRS transmission configuration and when configuration for SL-PRS transmission resource is actually made. Alternatively, in case that the LMF indicates the transmission timing of SL-PRS, it may be a requirement for whether SL-PRS transmission should actually be made within a specific time offset from the corresponding timing)
* Activation/deactivation time

In this case, in case that there is one or more UEs that must perform SL-PRS transmission, the above parameters may be given to each UE. Also, in case that both the shared transmission resource pool and the SL-P dedicated transmission resource pool are configured, the UE may use the SL-P dedicated transmission resource pool by default. Alternatively, an indicator may be configured for the UE as to which of the two configured pools to use.
- 8b. SL-PRS Tx configuration confirm (S950):

The SL-PRS transmitting UE may respond to the LMF 909 that it may perform the SL-PRS transmission operation as requested by the LMF 909 in operation 8a (S945).
** For the signaling of operations 8a and 8b, a new LPP message may be defined or an existing LPP message (Request/Provide Assistance data, Request/Provide Location Information, etc.) may be reused.

- 9. Activate SL-PRS Tx (S955):

In case that the SL-PRS Resource type is aperiodic or semi-persistent, an SL-PRS transmission activation/deactivation operation may be required. The UE that transmits SL-PRS may perform an activation operation upon request of the LMF 909.
* 9a. The LMF 909 may request SL-PRS transmission activation to the target UE 900 and anchor UE 903. Such a request may be transferred together with information about a specific activation timing.
* 9b. The UE that transmits SL-PRS may report the activation result to the LMF 909. In this case, the activation result may include information about the accurate SL-PRS transmission activation timing.

- 10. LPP Provide Assistance Data (S960):

The LMF 909 may transfer the SL-P transmission resource pool information and SL-PRS configuration information obtained in operation 7 (S943) and operation 8 (S950) to the target UE 900 and anchor UE 903 as location estimation assistance data through an LPP message. If the activation operation of operation 9 (S955) was performed for the aperiodic/semi-persistent resource type, the information about activation timing obtained in operation 9b may also be included here.
- 11. LPP Request Location Information (S965):

The LMF 909 may indicate the target UE 900 and anchor UE 903 to perform necessary SL-PRS measurement and report the results through an LPP message. In this case, the LMF 909 may indicate SL-PRS measurement to both the target UE 900 and the anchor UE 903, or only one of them, depending on the location estimation technique used.
- 12. UE SL-PRS measurement (S970):

The target UE 900 and anchor UE 903 may perform necessary SL-PRS measurement according to the indication of the LMF 909. As described above, measurement operation may be performed only on one of the UEs depending on the location estimation technique.
- 13. LPP Provide Location Information (S975):

The target UE 900 and anchor UE 903 may report the measurement result (calculated location information in case of UE-based mode) to the LMF 909. In the case of the anchor UE 903, in order for the absolute positioning estimation of the target UE 900, it may additionally report information about its actual location (known location).
- 14. Location determination (S980):

The LMF 909 may finally determine the location of the target UE 900.
- 15. Location response (S985):

The LMF 909 may transfer the location estimation result of the target UE 900 to the AMF 907.

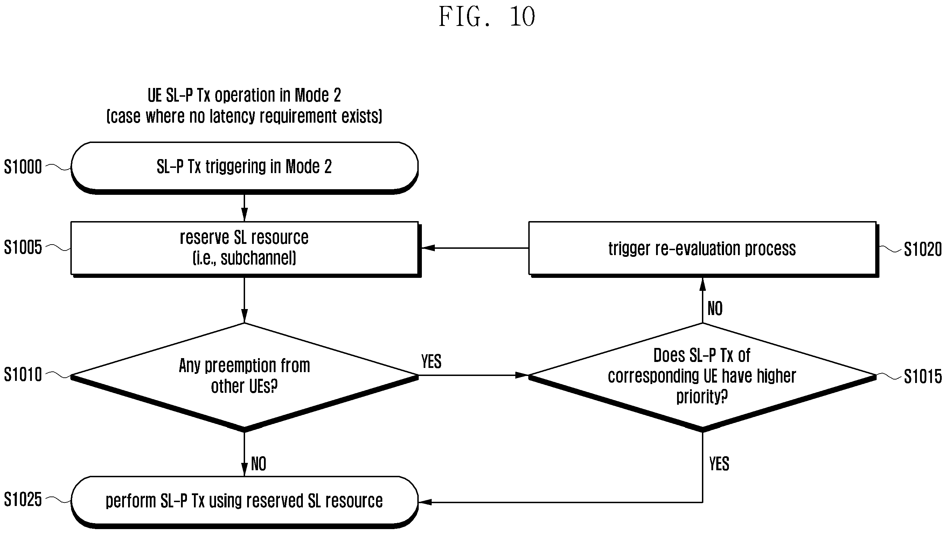

FIG. 10 is a flowchart of a process for selecting and transmitting necessary SL resources in Mode 2 scheme in case that a UE according to an embodiment of the disclosure does not have a latency requirement for SL-P transmission.

With reference to FIG. 10, in case that SL MAC PDU transmission (SL-P related control message and SL-PRS transmission) is required on a PC5 interface for SL-P operation, the UE may select SL transmission resources in Mode 2 scheme. More specific operations are defined below.
- SL-P Tx triggering in Mode 2 (S1000):

SL MAC PDU transmission for performing SL-P operation may be triggered in a target UE and an anchor UE. In this case, in case of using Mode 2 scheme, the UE may select a transmission resource from a preconfigured SL transmission resource pool (e.g., sl-TxPoolSelectedNormal or sl-TxPoolSelectedNormalPS (a resource pool to which power saving is applied)).
- Reserve SL resource (i.e., slot and subchannel) (S1005):

The UE may select a transmission resource from the configured SL transmission resource pool and reserve the corresponding resource. In the case of the dynamic technique, resources for the initial transmission and retransmission of each transport block (TB) to be transmitted may be reserved. In the case of the semi-persistent technique, transmission resources may be reserved in units of resource reservation interval (RRI) for continuous TB transmission. The UE may notify other UEs of whether transmission resources have been reserved by transmitting sidelink control information (SCI). The SCI may include information about the reserved transmission resources (e.g., subchannel).

In addition, during the SL transmission resource selection and reservation process, a case where pre-emption is allowed for SL-P related SL MAC PDU transmission resources may be considered. In the case of performing SL-P by transmitting/receiving SL MAC PDU related to SL-P (e.g., SL-P related control message or SL-PRS), the transmission priority of SL MAC PDU may be determined to be mapped to the priority of the service related to this positioning. For example, a transmitting UE that intends to transmit SL-PRS, while sensing the SL resource pool to determine SL-PRS transmission resources, if it determines that a specific resource is reserved for other SL transmissions (including other SL-PRS transmissions) and the priority of the SL-PRS transmission to be transmitted is higher than the priorities of other SL transmissions, it may determine that the resource may be preemptively used and select the corresponding resource accordingly.
- Any preemption from other UEs? (S1010):

If a transmitting UE that is to transmit an SL-P-related SL MAC PDU determines that another UE has pre-empted the resources already reserved for the corresponding transmission for another SL transmission, the transmitting UE may compare the SL-P-related SL transmission priority with the SL transmission priority of the other UE in operation S1015 described below. If no pre-emption is detected, the transmitting UE may transmit the corresponding SL-P-related SL MAC PDU on the previously reserved resources in operation S1025 described below.
- My SL-P Tx has higher priority? (S1015):

As described above, if a transmitting UE that is to transmit an SL-P-related SL MAC PDU determines that another UE has pre-empted the resources reserved for the transmission for another SL transmission, the transmitting UE may compare the corresponding SL-P-related SL transmission priority with the SL transmission priority of the other UE. If the priority of SL-P related SL transmission is higher, the corresponding SL-P related SL MAC PDU may be transmitted from the previously reserved resource in operation S1025. On the other hand, if the priority of SL-P related SL transmission is lower than the SL transmission priority of another UE, the UE that transmits the SL-P related SL MAC PDU may perform re-evaluation in operation S1020, which will be described later.
- Trigger re-evaluation process (S1020):

A transmitting UE that intends to transmit the SL-P related SL MAC PDU may reconfirm the available SL transmission resources (re-evaluation) and then re-select the resources to be used for the corresponding SL MAC PDU transmission. After that, reservation may be performed through SCI transmission for the re-selected resources in operation S1005.
- SL-P Tx using the reserved SL resource (S1025):

A transmitting UE that intends to transmit the SL-P related SL MAC PDU may transmit the corresponding SL MAC PDU through the SL transmission resource that has been previously reserved.

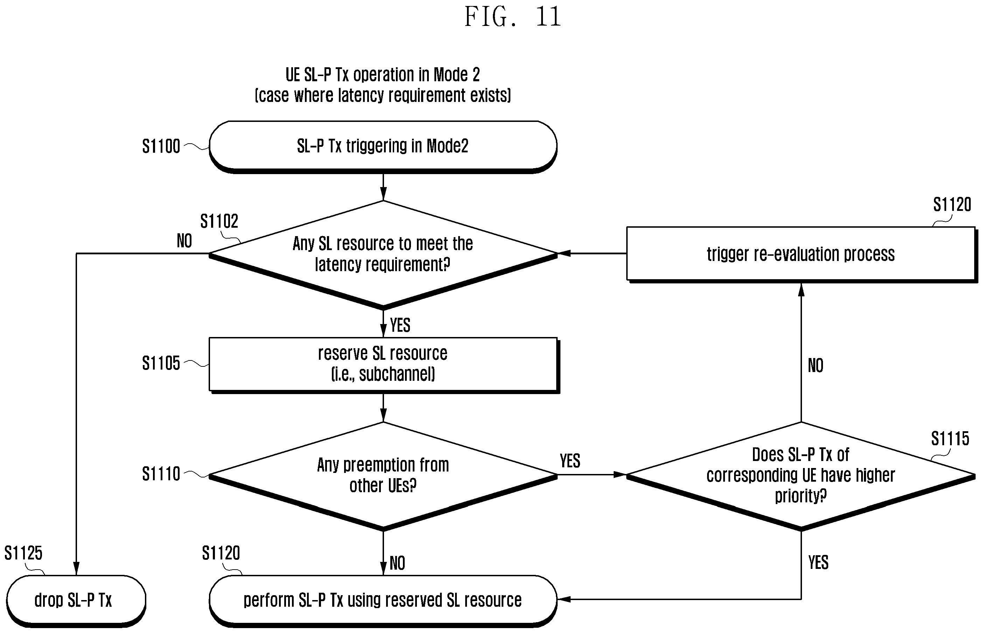

FIG. 11 is a flowchart of a process for selecting and transmitting necessary SL resources in Mode 2 scheme in case that a UE has a latency requirement for SL-P transmission according to an embodiment of the disclosure.

With reference to FIG. 11, in case that SL MAC PDU transmission (SL-P related control message and SL-PRS transmission) is required on a PC5 interface for SL-P operation, the UE may select SL transmission resources in Mode 2 scheme. In this case, a latency requirement (e.g., required transmission latency time) for SL-P related SL MAC PDU transmission may be given from a higher layer. For example, in case that an SL MAC PDU to be transmitted includes a control message that must be exchanged for SL-P related measurement operation, the LPP layer may provide a latency requirement for the corresponding SL MAC PDU transmission according to a response time value requested by the UE from the LMF. In addition, in case that SL-PRS transmission is required with respect to SL-P, information such as timing at which the corresponding SL-PRS should be transmitted and maximum allowable time offset may be provided from the higher layer. More specific operations are described below.
- SL-P Tx triggering in Mode 2 (S1100):

SL MAC PDU transmission for performing SL-P operation may be triggered in a target UE and anchor UE. In this case, in the case of using Mode 2 scheme, the UE may select a transmission resource from a preconfigured SL transmission resource pool (e.g., sl-TxPoolSelectedNormal or sl-TxPoolSelectedNormalPS (resource pool to which power saving is applied)).
- Any SL resource to meet the latency requirement? (S1102):

In case that a UE that transmits SL-P related SL MAC PDU is provided with a latency requirement for the corresponding transmission from the higher layer, the UE may determine whether there is an SL transmission resource that may satisfy the corresponding latency requirement. For example, in case that the SL MAC PDU to be transmitted includes a control message that must be exchanged for SL-P related measurement operation, the UE may determine whether there is an SL transmission resource that may be used for the corresponding SL MAC PDU transmission while satisfying the requirement (e.g., required transmission latency) provided by the LPP layer. In case that there is no SL transmission resource available within the required transmission latency, the UE may cancel the corresponding SL MAC PDU transmission in operation S1125. However, even in case that there is no SL transmission resource that may satisfy the definition of the latency requirement given by the higher layer, the UE may proceed to operation S1105 and continue the corresponding SL MAC PDU transmission. In addition, in case that SL-PRS transmission is required for SL-P, it may be determined whether there are SL transmission resources that may satisfy the timing at which the corresponding SL-PRS should be transmitted and the maximum allowable time offset. Also, in case that there are no SL transmission resources available within the required transmission timing and the maximum allowable time offset from the corresponding timing, the UE may cancel the corresponding SL-PRS transmission in operation S1125.
- Reserve SL resource (i.e., slot and subchannel) (S1105):

The UE may select a transmission resource from the configured SL transmission resource pool and reserve the corresponding resource. If, as described in operation S1102, a latency requirement for the corresponding transmission is given from the higher layer, the SL transmission resource reservation may be performed considering the corresponding latency requirement. In the case of the dynamic technique, resources for the initial transmission and retransmission of each transport block (TB) to be transmitted may be reserved. In the case of the semi-persistent technique, transmission resources may be reserved in units of resource reservation interval (RRI) for continuous TB transmission. The UE may inform other UEs whether transmission resources are reserved by transmitting sidelink control information (SCI). The SCI may include information about reserved transmission resources (e.g., subchannels).

In addition, a case where pre-emption is allowed for SL-P related SL MAC PDU transmission resources may be considered during the SL transmission resource selection and reservation process. In case that SL-P is performed by transmitting/receiving SL-P related SL MAC PDUs (e.g., SL-P related control messages or SL-PRS), the SL MAC PDU transmission priority may be determined to be mapped to the priority of the service related to this positioning. For example, if a transmitting UE that intends to transmit SL-PRS determines that a specific resource is reserved for another SL transmission (including another SL-PRS transmission) while sensing the SL resource pool to determine the SL-PRS transmission resource, and if it determines that the priority of the SL-PRS transmission to be transmitted is higher than that of the other SL transmission, it may determine that the corresponding resource may be preemptively used, and select the corresponding resource accordingly.
- Any preemption from other UEs? (S1110):

If a transmitting UE that intends to transmit SL-P related SL MAC PDU determines that another UE has pre-empted the resource already reserved for the corresponding transmission for another SL transmission, it may compare the SL-P related SL transmission priority with the SL transmission priority of the other UE in operation S1115 described below. If no pre-emption is detected, the SL-P related SL MAC PDU may be transmitted from the previously reserved resource in operation S1125 described below.
- My SL-P Tx has higher priority? (S1115):

If a transmitting UE that intends to transmit the SL-P related SL MAC PDU determines that another UE has pre-empted the resources reserved for the corresponding transmission for another SL transmission, it may compare the corresponding SL-P related SL transmission priority with the SL transmission priority of the other UE. If the priority of the SL-P related SL transmission is higher, the corresponding SL-P related SL MAC PDU may be transmitted on the previously reserved resources in operation S1125 described below. On the other hand, if the priority of the SL-P related SL transmission is lower than the SL transmission priority of the other UE, the UE that transmits the SL-P related SL MAC PDU may perform a re-evaluation in operation S1120 described below.
- Trigger re-evaluation process (S1120):

As described above, the transmitting UE that intends to transmit the SL-P related SL MAC PDU may re-confirm the available SL transmission resources and then re-select the resources to be used for transmitting the corresponding SL MAC PDU. Thereafter, in operation 105, a reservation for the re-selected resources may be performed through SCI transmission.
- SL-P Tx using the reserved SL resource (S1125):

The transmitting UE that intends to transmit the SL-P related SL MAC PDU may transmit the corresponding SL MAC PDU through the previously reserved SL transmission resources.

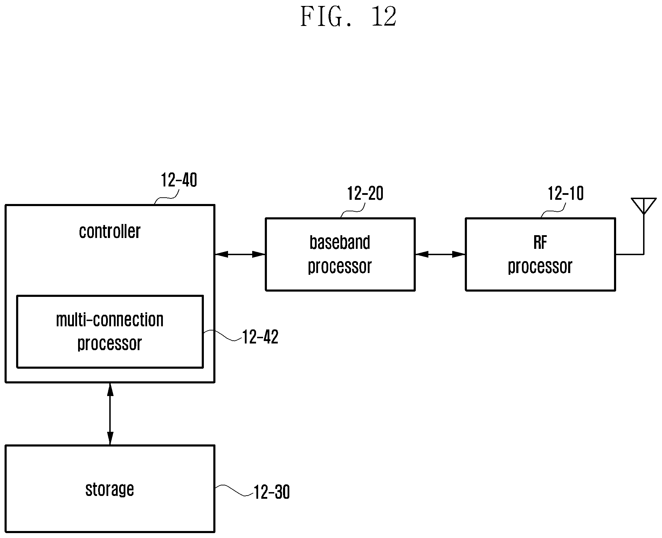

FIG. 12 is a block diagram illustrating a UE device according to an embodiment of the disclosure.

With reference to FIG. 12, a UE may include a radio frequency (RF) processor 12-10, a baseband processor 12-20, a storage 12-30, and a controller 12-40. The constitution of the UE is not limited to the exemplary constitution illustrated in FIG. 12, and may include fewer or more components than the components illustrated in FIG. 12.

The RF processor 12-10 may perform a function for transmitting and receiving a signal through a radio channel such as band conversion, amplification, etc. That is, the RF processor 12-10 may up-convert a baseband signal provided from the baseband processor 12-20 into an RF band signal and then transmit the RF band signal through an antenna, and down-convert the RF band signal received through the antenna into a baseband signal. For example, the RF processor 12-10 may include a transmission filter, a reception filter, an amplifier, a mixer, an oscillator, a digital to analog convertor (DAC), an analog to digital convertor (ADC), etc., but is not limited thereto. Although one antenna is illustrated in FIG. 12, the UE may include a plurality of antennas. Further, the RF processor 12-10 may include a plurality of RF chains. Furthermore, the RF processor 12-10 may perform beamforming. For the beamforming, the RF processor 12-10 may adjust a phase and magnitude of each of signals transmitted and received through the plurality of antennas or antenna elements. In addition, the RF processor 12-10 may perform a multiple input multiple out (MIMO) operation, and receive a plurality of layers upon performing the MIMO operation.

The baseband processor 12-20 may perform a transformation function between a baseband signal and a bit stream according to a physical layer standard of a system. For example, the baseband processor 12-20 may encode and modulate a transmission bit stream to generate complex symbols upon data transmission. In addition, the baseband processor 12-20 may recover a reception bit stream by demodulating and decoding the baseband signal provided from the RF processor 12-10 upon data reception. For example, in a case of following an orthogonal frequency division multiplexing (OFDM) scheme, upon data transmission, the baseband processor 12-20 may encode and modulate a transmission bit stream to generate complex symbols, map the generated complex symbols to subcarriers, and then constitute OFDM symbols by an inverse fast Fourier transform (IFFT) operation and cyclic prefix (CP) insertion. In addition, upon data reception, the baseband processor 12-20 may divide the baseband signal provided from the RF processor 12-10 on an OFDM symbol basis, recover signals mapped to subcarriers by a fast Fourier transform (FFT) operation, and then recover a reception bit stream though demodulation and decoding.

As described above, the baseband processor 12-20 and RF processor 12-10 may transmit and receive a signal. According to this, the baseband processor 12-20 and RF processor 12-10 may be referred to as a transmitter, a receiver, a transceiver, or a communication unit. Further, at least one of the baseband processor 12-20 and the RF processor 12-10 may include a plurality of communication modules for supporting different radio access technologies. In addition, at least one of the baseband processor 12-20 and the RF processor 12-10 may include different communication modules for processing signals on different frequency bands. For example, the different radio access technologies may include wireless LAN (e.g., IEEE 802.11), a cellular network (e.g., LTE), etc. In addition, the different frequency bands may include a super high frequency (SHF)(e.g., 2.NRHz and NRhz) band, and a millimeter wave (e.g., 60 GHz) band. The UE may transmit and receive signals with the gNB using the baseband processor 12-20 and the RF processor 12-10, and the signals may include control information and data.

The storage 12-30 may store a basic program, an application program, configuration information, etc., for an operation of the UE. For example, the storage 12-30 may store data information such as a basic program, application program, and configuration information for the operation of the UE. In addition, the storage 12-30 may provide stored data according to request of the controller 12-40.

The storage 12-30 may be constituted with a storage medium such as ROM, RAM, a hard disk, CD-ROM, and a DVD, or any combination thereof. Also, the storage 12-30 may be constituted with a plurality of memories. According to an embodiment of the disclosure, the storage 12-30 may store a program for performing a handover method according to the disclosure.

The controller 12-40 may control the overall operations of the UE. For example, the controller 12-40 may transmit and receive a signal through the baseband processor 12-20 and RF processor 12-10.

In addition, the controller 12-40 may record data into the storage 12-30 and read data from the storage 12-30. For this, the controller 12-40 may include at least one processor. For example, the controller 12-40 may include a communication processor (CP) which performs control for a communication and an application processor (AP) which controls a higher layer such as an application program. In addition, according to an embodiment of the disclosure, the controller 12-40 may include a multi-connection processor 12-42 constituted to process a process operating in a multi-connection mode. In addition, at least one constitution within the UE may be implemented as one chip.

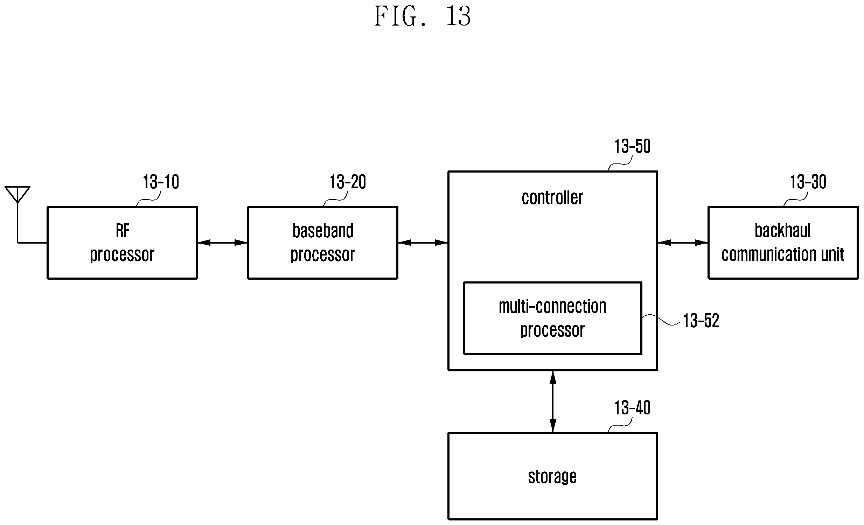

FIG. 13 is a diagram illustrating a base station device according to an embodiment of the disclosure.

The base station of FIG. 13 may be included in the above-described network.

As illustrated in FIG. 13, a base station may include an RF processor 13-10, a baseband processor 13-20, a backhaul communication unit 13-30, a storage 13-40, and a controller 13-50. The constitution of the base station is not limited to the exemplary constitution illustrated in FIG. 13, and the base station may include fewer or more components than the components illustrated in FIG. 13. The RF processor 13-10 may perform a function for transmitting and receiving a signal through a radio channel such as band conversion, amplification, etc. That is, the RF processor 13-10 may up-convert a baseband signal provided from the baseband processor 13-20 into an RF band signal and then transmit the RF band signal through an antenna, and down-convert the RF band signal received through the antenna into a baseband signal. For example, the RF processor 13-10 may include a transmission filter, a reception filter, an amplifier, a mixer, an oscillator, a DAC, an ADC, etc. Although one antenna is illustrated in FIG. 13, the RF processor 13-10 may include a plurality of antennas. Further, the RF processor 13-10 may include a plurality of RF chains. Furthermore, the RF processor 13-10 may perform beamforming. For the beamforming, the RF processor 13-10 may adjust a phase and magnitude of each of signals transmitted and received through the plurality of antennas or antenna elements. The RF processor 13-10 may perform a downward MIMO operation by transmitting one or more layers.

The baseband processor 13-20 may perform a transformation function between a baseband signal and a bit stream according to a physical layer standard. For example, the baseband processor 13-20 may encode and modulate a transmission bit stream to generate complex symbols upon data transmission. In addition, the baseband processor 13-20 may recover a reception bit stream by demodulating and decoding the baseband signal provided from the RF processor 13-10 upon data reception. For example, in a case of following an OFDM scheme, upon data transmission, the baseband processor 13-20 may encode and modulate a transmission bit stream to generate complex symbols, map the generated complex symbols to subcarriers, and then constitute OFDM symbols by an IFFT operation and CP insertion. In addition, upon data reception, the baseband processor 13-20 may divide the baseband signal provided from the RF processor 13-10 on an OFDM symbol basis, recover signals mapped to subcarriers by a FFT operation, and then recover a reception bit stream though demodulation and decoding. As described above, the baseband processor 13-20 and RF processor 13-10 may transmit and receive a signal. According to this, the baseband processor 13-20 and RF processor 13-10 may be referred to as a transmitter, a receiver, a transceiver, a communication unit, or a wireless communication unit. The base station may transmit and receive signals with the UE using the baseband processor 13-20 and the RF processor 13-10, and the signals may include control information and data.

The backhaul communication unit 13-30 may provide an interface for communicating with other nodes within a network. For example, the backhaul communication unit 13-30 may convert a bit stream which is transmitted from a primary base station to other node, e.g., a secondary base station, a core network, etc. into a physical signal, and convert the physical signal received from the other node into a bit stream.

The storage 13-40 may may store data information such as a basic program, application program, and configuration information for the operation of the primary base station. The storage 13-40 may store information about bearers allocated to connected UEs, measurement results reported from connected UEs, etc. In addition, the storage 13-40 may store information that serves as a criterion for determining whether to provide multiple connections to a UE or to terminate them. Further, the storage 13-40 may provide the stored data according to the request from the controller 13-50. The storage 13-40 may be constituted with a storage medium such as ROM, RAM, a hard disk, CD-ROM, and a DVD, or any combination thereof. Also, the storage 13-40 may be constituted with a plurality of memories. According to an embodiment of the disclosure, the storage 13-40 may store a program for performing a handover method according to the disclosure.

The controller 13-50 may control the overall operations of the primary base station. For example, the controller 13-50 may transmit and receive a signal through the baseband processor 13-20 and RF processor 13-10, or the backhaul communication unit 3-30. In addition, the controller 13-50 may record data into the storage 13-40 and read data from the storage 13-40. For this, the controller 13-50 may include at least one processor. In addition, according to an embodiment of the disclosure, the controller 13-50 may include a multi-connection processor 13-52 constituted to process a process operating in a multi-connection mode.

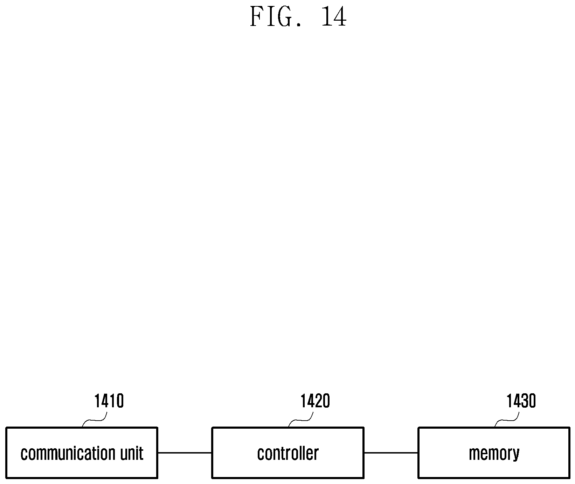

FIG. 14 is a block diagram of a structure of an LMF entity according to an example of the disclosure.

With reference to FIG. 14, an LMF entity according to an embodiment of the disclosure may include a communication unit 1410, a controller 1420, and a memory 1430. The communication unit 1410, controller 1420, and storage 1430 may operate according to the communication method of the LMF entity described above. However, the components of the LMF entity are not limited to the examples described above. For example, the LMF entity may include more or fewer components than the components described above. For example, the LMF entity may include the communication unit 1410 and the controller 1420, and the communication unit 1410 may additionally include a backhaul communication unit for communication with another network entity. In addition, the communication unit 1410, controller 1420, and memory 1430 may be implemented in the form of a single chip.

The communication unit 1410 is a general term for the receiver and the transmitter of the LMF entity, and may transmit and receive messages with other network nodes, base stations, etc. The communication unit 1410 may, for example, transmit a request message or a response message to the base station through a predetermined interface. The communication unit 1410 may include various constitutions for transmitting and receiving signals, and may output a received signal to the controller 1420 and transmit the signal output from the controller 1420. In addition, the communication unit 1410 may receive a communication signal and output it to the processor, and transmit the signal output from the processor to another network entity through the network.

The memory 1430 may store data such as basic programs, application programs, and configuration information necessary for the operation of the LMF entity. In addition, the memory 1430 may provide stored data upon request of the controller 1420.

In the disclosure, the controller 1420 may be defined as a circuit or an application-specific integrated circuit or at least one processor. The processor may include a communication processor (CP) that performs control for communication and an application processor (AP) that controls higher layers such as an application program. The controller 1420 may control the overall operation of the LMF entity according to the embodiment proposed in the disclosure. For example, the controller 1420 may control the signal flow between respective blocks to perform an operation according to the flowchart described above.

The methods according to the embodiments described in the claims or specification of the disclosure may be implemented as hardware, software, or a combination thereof.

In case that the methods are implemented as software, a computer-readable storage medium having stored therein one or more programs (software modules) may be provided. The one or more programs stored in the computer-readable storage medium may be configured for execution by one or more processors in an electronic device. The one or more programs include instructions that cause the electronic device to execute the methods according to the embodiments described in the claims or the specification of the disclosure.

These programs (software modules and software) may be stored in random access memory, non-volatile memories including flash memories, read only memory (ROM), electrically erasable programmable read only memory (EEPROM), magnetic disc storage device, compact Disc-ROM (CD-ROM), Digital Versatile Discs (DVDs), other types of optical storage devices, or magnetic cassettes. Alternatively, the programs may be stored in a memory configured by a combination of some or all of such storage devices. Also, each of the memories may be provided in plurality.

In addition, the programs may be stored to an attachable storage device that is accessible via a communications network such as the Internet, an intranet, a local area network (LAN), a wide LAN (WLAN), or a storage area network (SAN), or a combination thereof. The storage device may access a device performing the embodiment of the disclosure through an external port. Furthermore, a separate storage device in a communication network may access a device performing the embodiment of the disclosure.

In the disclosure, the term "computer program product" or "computer-readable medium" may be used to overall indicate a medium such as a memory, a hard disk installed in a hard disk drive, a signal, etc. These "computer program products" or "computer-readable media" are components provided for a method of reporting UE capability in a wireless communication system according to the disclosure.

The machine-readable storage medium may be provided in the form of a non-transitory storage medium. Wherein, the term 'non-transitory storage medium' simply means that the storage medium is a tangible device, and does not include a signal (e.g., an electromagnetic wave), but this term does not differentiate between where data is semi-permanently stored in the storage medium and where the data is temporarily stored in the storage medium. For example, the 'non-transitory storage medium' may include a buffer in which data is temporarily stored.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. In the case of being distributed online, at least a part of the computer program product (e.g., a downloadable app) may be temporarily generated or at least temporarily stored in the machine-readable storage medium, such as memory of the manufacturer's server, a server of the application store, or a relay server.

In the detailed embodiments of the disclosure, components included in the disclosure have been expressed as singular or plural according to the proposed detailed embodiment of the disclosure. However, singular or plural expressions have been selected properly for a condition provided for convenience of a description, and the disclosure is not limited to singular or plural components and components expressed as plural may be configured as a single component or a component expressed as singular may also be configured as plural components.

Meanwhile, the embodiments of the disclosure disclosed in this specification and drawings are only specific examples presented to easily explain the technical contents of the disclosure and help in understanding the disclosure, and are not intended to limit the scope of the disclosure. That is, it is obvious to a person having ordinary skill in the art to which the disclosure pertains that other modified examples based on the technical idea of the disclosure are feasible. In addition, each of the above embodiments can be combined and operated with each other as needed. For example, parts of one embodiment of the disclosure and parts of another embodiment can be combined with each other to operate a base station and a UE. In addition, the embodiments of the disclosure can be applied to other communication systems, and other modified examples based on the technical idea of the embodiments can also be implemented. For example, the embodiments can be applied to an LTE system, a 5G, a NR system, or a 6G system. Therefore, the scope of the disclosure should not be limited to the described embodiments, but should be defined not only by the scope of the claims described below but also by equivalents of the scope of the claims.

## Claims

1. A method of a base station in a communication system, comprising:
obtaining a request message requesting a configuration for transmission of a sidelink positioning reference signal (SL-PRS);
determining the configuration for the transmission of the SL-PRS, on the basis of a parameter indicating a requirement related to the transmission of the SL-PRS, which is included in the request message; and
transmitting, to a terminal that performs a sidelink positioning operation, a configuration message including the determined configuration for the transmission of the SL-PRS,
wherein the terminal that performs the sidelink positioning operation includes at least one of a target terminal and an anchor terminal.

2. The method of claim 1, wherein the request message is received from a location management function (LMF) entity that controls the sidelink positioning operation, or the terminal that performs the sidelink positioning operation, and
when the request message is received from the LMF entity, the determined configuration related to the transmission of the SL-PRS is transmitted to the LMF entity in response to the request message.

3. The method of claim 1, wherein the parameter includes at least one of resource type, number and periodicity of SL-PRS transmission required, bandwidth of the SL-PRS, spatial/pathloss information, identity (ID) for SL-PRS groupcast or broadcast, scheduling latency requirement, and activation/deactivation time.

4. A method of a terminal in a communication system, comprising:
transmitting, to a base station, a request message requesting a configuration for transmission of a sidelink positioning reference signal (SL-PRS); and
receiving, from the base station, a configuration message including the configuration for the transmission of the SL-PRS, on the basis of the request message,
wherein the request message includes a parameter indicating a requirement related to the transmission of the SL-PRS,
the terminal is a target terminal or an anchor terminal that performs a sidelink positioning operation.

5. The method of claim 4, further comprising receiving, from a location management function (LMF) entity that controls the sidelink positioning operation, a first long term evolution (LTE) positioning protocol (LPP) message including the parameter,
wherein the request message is transmitted to the base station, on the basis of the first LPP message,
a second LPP message including the configuration for the transmission of the SL-PRS is transmitted to the LMF entity in response to the first LPP message,
the parameter includes at least one of resource type, number and periodicity of SL-PRS transmission required, bandwidth of the SL-PRS, spatial/pathloss information, identity (ID) for SL-PRS groupcast or broadcast, scheduling latency requirement, and activation/deactivation time.

6. A method of a location management function (LMF) entity in a communication system, comprising:
confirming a requirement related to transmission of a sidelink positioning reference signal (SL-PRS);
transmitting, to a base station, a request message requesting a configuration for the transmission of the SL-PRS wherein the request message includes a parameter indicating a requirement related to the transmission of the SL-PRS; and
obtaining the configuration for the transmission of the SL-PRS, on the basis of the request message.

7. The method of claim 6, wherein the configuration for the transmission of the SL-PRS is received from the base station or a terminal that performs a sidelink positioning operation,
when the request message is transmitted to the base station by the terminal that performs the sidelink positioning operation, which has received a first long term evolution (LTE) positioning protocol (LPP) message including the parameter from the LMF entity, the configuration for the transmission of the SL-PRS is received from the terminal that performs the sidelink positioning operation through a second LPP message which is a response to the first LPP message,
the terminal that performs the sidelink positioning operation includes at least one of a target terminal and an anchor terminal,
the parameter includes at least one of resource type, number and periodicity of SL-PRS transmission required, bandwidth of the SL-PRS, spatial/pathloss information, identity (ID) for SL-PRS groupcast or broadcast, scheduling latency requirement, and activation/deactivation time.

8. A base station in a communication system, comprising:
a transceiver; and
a controller that controls the transceiver to obtain a request message requesting a configuration for transmission of a sidelink positioning reference signal (SL-PRS), determine the configuration for the transmission of the SL-PRS, on the basis of a parameter indicating a requirement related to the transmission of the SL-PRS, which is included in the request message, and transmit, to a terminal that performs a sidelink positioning operation, a configuration message including the determined configuration for the transmission of the SL-PRS,
wherein the terminal that performs the sidelink positioning operation includes at least one of a target terminal and an anchor terminal.

9. The base station of claim 8, wherein the request message is received from a location management function (LMF) entity that controls the sidelink positioning operation, or the terminal that performs the sidelink positioning operation, and
when the request message is received from the LMF entity, the controller controls the transceiver to transmit the determined configuration for the transmission of the SL-PRS to the LMF entity in response to the request message.

10. The base station of claim 8, wherein the parameter includes at least one of resource type, number and periodicity of SL-PRS transmission required, bandwidth of the SL-PRS, spatial/pathloss information, identity (ID) for SL-PRS groupcast or broadcast, scheduling latency requirement, and activation/deactivation time.

11. A terminal in a communication system, comprising:
a transceiver; and
a controller that controls the transceiver to transmit, to a base station, a request message requesting a configuration for transmission of a sidelink positioning reference signal (SL-PRS), and receive, from the base station, a configuration message including the configuration for the transmission of the SL-PRS, on the basis of the request message,
wherein the request message includes a parameter indicating a requirement related to the transmission of the SL-PRS,
the terminal is a target terminal or an anchor terminal that performs a sidelink positioning operation.

12. The terminal of claim 11, wherein the controller controls the transceiver to receive, from a location management function (LMF) entity that controls the sidelink positioning operation, a first long term evolution (LTE) positioning protocol (LPP) message including the parameter, transmit the request message to the base station, on the basis of the first LPP message, and transmit, to the LMF entity, a second LPP message including the configuration for the transmission of the SL-PRS, in response to the first LPP message,
the parameter includes at least one of resource type, number and periodicity of SL-PRS transmission required, bandwidth of the SL-PRS, spatial/pathloss information, identity (ID) for SL-PRS groupcast or broadcast, scheduling latency requirement, and activation/deactivation time.

13. A location management function (LMF) entity in a communication system, comprising:
a communication unit; and
a controller that controls the communication unit to confirm a requirement related to transmission of a sidelink positioning reference signal (SL-PRS) and transmit, to a base station, a request message requesting a configuration for the transmission of the SL-PRS, and obtains the configuration for the transmission of the SL-PRS, on the basis of the request message,
wherein the request message includes a parameter indicating a requirement related to the transmission of the SL-PRS.

14. The LMF entity of claim 13, wherein the configuration for the transmission of the SL-PRS is received from the base station or a terminal that performs a sidelink positioning operation,
when the request message is transmitted to the base station by the terminal that performs the sidelink positioning operation, which has received a first long term evolution (LTE) positioning protocol (LPP) message including the parameter from the LMF entity, the configuration for the transmission of the SL-PRS is received from the terminal that performs the sidelink positioning operation through a second LPP message which is a response to the first LPP message,
the terminal that performs the sidelink positioning operation includes at least one of a target terminal and an anchor terminal,
the parameter includes at least one of resource type, number and periodicity of SL-PRS transmission required, bandwidth of the SL-PRS, spatial/pathloss information, identity (ID) for SL-PRS groupcast or broadcast, scheduling latency requirement, and activation/deactivation time.
